# EUROPEAN PATENT APPLICATION

(11) **EP 1 083 494 A2**
(43) Date of publication of application: **14.03.2001**
(21) Application number: 00119288.9
(22) Date of filing: 06.09.2000
(51) Int. Cl.: G06F 17/30

(54) **Communications system for clients with limited memory capacity**

(30) Priority: 10.09.1999 JP 25655799
(71) Applicant: NEC CORPORATION, Tokyo (JP)
(72) Inventor: Shimizu, Hiroaki, NEC Corporation, Tokyo (JP)
(74) Representative: Glawe, Delfs, Moll & Partner

(57) **Abstract**

A communications system is provided with a contents storing server for storing contents to be distributed, and a client that is composed of a real storage for storing contents actually and a virtual storage for storing a location of contents stored. The client stores, into the virtual storage, information to indicate the location of contents not storable in the real storage in capacity when acquiring the contents from the contents storing server. Also the communications system is provided with a gateway that is placed between the contents storing server and the client. The gateway stores the contents at a position of an assigned storing area in the gateway corresponding to the information to indicate the location of the contents when the location information is stored into the virtual storage.

## Description

### FIELD OF THE INVENTION

This invention relates to a communications system especially suitable for a case that a relatively small communications device is used to handle a relatively large amount of data.

### BACKGROUND OF THE INVENTION

In recent years, personal computers and PC-related devices have permeated society, whereby persons are doing the transmission and consumption of information actively. Although at the beginning most part of communications using telephone is occupied by speech communications, at present the ratio of communications for information except speech, such as communications by facsimile, are increasing.

This is just as valid for mobile communications. Namely, along with the rapid permeation of email and Internet, transmission/reception of emails, accessing a desired homepage on WWW (world wide web) to acquire necessary information and uploading information to a personal homepage are casually done other than speech communications.

By the way, in communications device such as personal computers for acquiring information from information source such as Internet, information acquired is usually used as is but often used after it is stored. For example, taking the case of downloading a homepage, all desired files on the homepage are downloaded when the homepage is accessed first time. However, when downloading the homepage next time, if the files downloaded first time are saved, files updated after that only have to be downloaded. Therefore, the time required for the download can be reduced and the processing of image can be sped up.

Until recently, stationary-type computers or relatively large communications devices, which are placed at office or home, are mainly used to communicate with such an information source. Although these devices need, as a prerequisite, a sufficient amount of memory (storage) to the communications, this need can be satisfied because they are of stationary type. Namely, these devices are designed on condition that they are used to save a variety of contents such as WWW homepage, video mail and image and speech data for karaoke. So, in such devices purchased, it is not necessary to worry about whether they are able to save the contents sufficiently or not. Such necessity to worry about that occurs only when its internal storage such as a hard disk drive is occupied by other information saved.

However, in case of communications devices such as portable telephone or portable computer, the memory capacity of a storage installed inside the devices must be limited to small one because the size or volume of device itself is very small. Therefore, although there is no problem when saving a relatively small amount of data such as text file of email into such a communications device, when saving a relatively large amount of contents such movie data, there may occur a problem that the memory capacity is too small to download the contents.

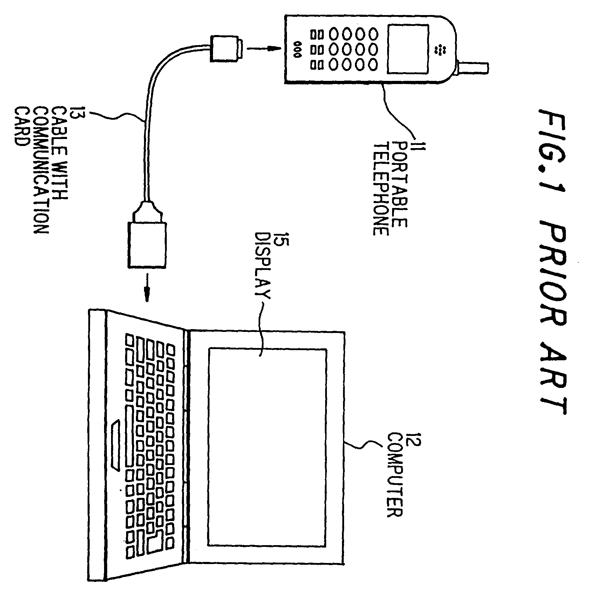

FIG.1 shows a conventional communications system to solve this problem. In this system, a laptop-type mobile computer 12 is provided in addition to a portable telephone 11. In downloading a large amount of data such as contents from information source, both are connected each other using a cable 13 with communication card, which is inserted into a card slot (not shown) of the computer 12 to connect the portable telephone 11 with the computer 12. Thus, using the portable telephone 11 as a radio terminal, the computer 12 is connected to a desired communication party. Data are stored into a storage inside the computer 12, and visual data are displayed on a display 15 of the computer 12 by using a browser.

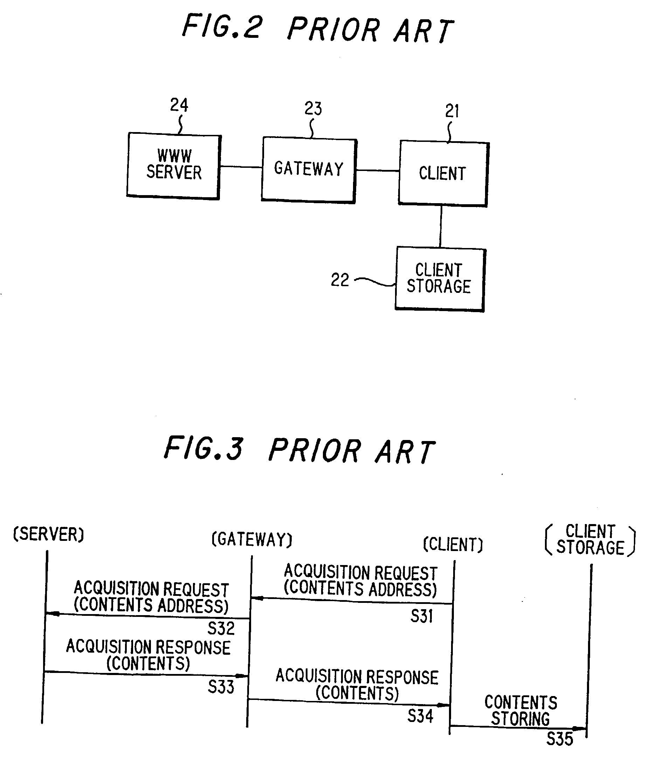

FIG.2 shows the composition of the conventional communications system for acquiring a variety of data (hereinafter referred to as contents). Meanwhile, in FIG.2, the portable telephone 11 and computer 12 are referred to as a client 21. The client 21 is provided with a client storage 22 as a storing component. The client 21 conducts the acquisition operation of contents from a server 24 through a gateway 23, and stores them into the client storage 22.

FIG.3 shows the processing flow in acquiring contents using the conventional communications system. At first, the client 21 sends a contents acquisition request to the gateway 23 (step S31). In detail, the contents acquisition request is made designating an address of desired contents in the server 24. The gateway 23 converts the request of the client 21 into signal for connection with the server 24. Then, it sends the contents acquisition request with the address of contents to the server 24 (step S32). In reply to this request the server 24 outputs the acquisition response (step S33), and the gateway 23 transfers the acquisition response to the client 21 (step S34). Thereafter, the client 21 acquires the contents from the server 24 and stores them into the client storage 22 (step S35). In the example in FIG.1, using the communication function of the portable telephone 11, the contents are stored into the storage such as a magnetic disk built in the computer 12 connected with the portable telephone 11.

By using such a system, the contents can be saved into the relatively large capacity of storage medium built in the computer 12 or into a large capacity of external storage medium further provided for the computer 12. Also, necessary visual information such as homepages on the Internet can be displayed on the display 15 of the computer 12. Furthermore, the system can be moved to a desired place since both the telephone 11 and the computer 12 are of portable type.

However, in the above system using both the portable telephone 11 and the mobile computer 12, there are problems described below.
(1) Since it is necessary to always carry the portable telephone 11 together with the mobile computer 12, to travel carrying the system that further includes its attachments such as a power adapter impose a big burden on its user. Also, since especially the mobile computer is usually expensive, the system imposes an economical burden on the user.
(2) In the system formed combining the portable telephone 11 and the mobile computer 12, only the function of transmission/reception is required for the portable telephone 11. Namely, only a part of the functions of the portable telephone 11 is used while it is capable of offering multiple functions as an information processing device. Recently, portable telephones with an increased area of display that makes various information such as email easy to see have been also developed. Thus, the conventional system fails to make good use of such advantageous functions of portable telephone.

The above explanations are made taking the case of the system formed combining the portable telephone 11 and the computer 12 with a relatively large amount of memory. However, similar problems also occur in another communication system using other devices. Here, the other devices mean PHS (personal handyphone system) instead of the portable telephone 11 or normal desktop-type computers that are lager than the portable telephone 11 but have insufficient amount of memory as compared with the amount of data in information source such as a server.

Recently, many of these devices are equipped with CPU and image-processing elements having rapidly-enhanced performance, and therefore they can practically handle information with a large amount of data such as movie data that were difficult to process. Further, since the communication speed increases rapidly in both wire and wireless communications, the user needs to image resolution or speech quality etc. become severer. Therefore, even desktop-type computers purchased recently may often lapse into a shortage of memory due to the increase of data or program to be acquired.

In case of a relatively large device such as the desktop-type computer, the shortage of memory may be covered by installing an additional memory. However, there are some cases that the device is too compact to accommodate the additional memory because the compactness in appearance is required for the device. Also, even in the case that it is possible to install the additional memory, there occur problems that an expensive special memory may be needed and that, when installing the additional memory, it is necessary to send the whole computer to its service department, therefore the computer cannot be used for a relatively long time.

Hereinafter, the devices, such as portable telephones and computers etc., used to acquire data from the server are named client generically.

### SUMMARY OF THE INVENTION

Accordingly, it is an object of the invention to provide a communications system that allows a client, which is subject to a limitation in amount of memory for data to be acquired from outside, to acquire freely contents with a relatively large amount of data.

It is a further object of the invention to provide a communications system that allows a client to acquire quickly even contents with a relatively large amount of data by using sufficiently a gateway placed between the client and its server.

According to the invention, a communications system, comprises:
a contents storing server for storing contents to be distributed;
a client that is composed of a real storage for storing contents actually and a virtual storage for storing a location of contents stored, wherein the client stores, into the virtual storage, information to indicate the location of contents not storable in the real storage in capacity when acquiring the contents from the contents storing server; and
a gateway that is placed between the contents storing server and the client, wherein the gateway stores the contents at a position of an assigned storing area in the gateway corresponding to the information to indicate the location of the contents when the location information is stored into the virtual storage.

According to another aspect of the invention, a communications system, comprises:
a contents storing server for storing contents to be distributed, the contents storing server being provided with a storing area for storing temporarily contents to be transmitted to a distributed party; and
a client that is composed of a real storage for storing contents actually and a virtual storage for storing a location of contents stored, wherein the client stores, into the virtual storage, information to indicate the location of contents not storable in the real storage in capacity when acquiring the contents from the contents storing server, and stores temporarily the contents into the storing area of the contents storing server.

According to further aspect of the invention, a communications system, comprises:
a contents storing server for storing contents to be distributed;
a temporary storing server that is provided with a storing area for storing temporarily contents to be transmitted to a distributed party requesting the contents; and
a client that is composed of a real storage for storing contents actually and a virtual storage for storing a location of contents stored, wherein the client stores, into the virtual storage, information to indicate the location of contents not storable in the real storage in capacity when acquiring the contents from the contents storing server, and stores temporarily the contents not storable into the storing area corresponding to the location information of the temporary storing server, and when the contents are needed, the client requests for the acquisition of the contents to the temporary storing server.

According to further aspect of the invention, a communications system, comprises:
a contents storing server for storing contents to be distributed;
a client that is composed of a virtual storage for storing a location of contents stored, wherein the client stores, into the virtual storage, information to indicate the location of contents when acquiring the contents from the contents storing server; and
a gateway that is placed between the contents storing server and the client, wherein the gateway stores the contents at a position of an assigned storing area in the gateway corresponding to the information to indicate the location of the contents when the location information is stored into the virtual storage.

According to further aspect of the invention, a communications system, comprises:
a contents storing server for storing contents to be distributed, the contents storing server being provided with a storing area for storing temporarily contents to be transmitted to a distributed party; and
a client that is composed of a virtual storage for storing a location of contents stored, wherein the client stores, into the virtual storage, information to indicate the location of contents when acquiring the contents from the contents storing server, and stores temporarily the contents into the storing area of the contents storing server, and based on the location information stored in the virtual storage, the client acquires the concerned contents from the storing area of the contents storing server at desired time.

According to further aspect of the invention, a communications system, comprises:
a contents storing server for storing contents to be distributed;
a temporary storing server that is provided with a storing area for storing temporarily contents to be transmitted to a distributed party requesting the contents; and
a client that is composed of a virtual storage for storing a location of contents stored, wherein the client stores, into the virtual storage, information to indicate the location of contents when acquiring the contents from the contents storing server, and stores temporarily the contents into the storing area corresponding to the location information of the temporary storing server, and when the contents are needed, the client requests for the acquisition of the contents to the temporary storing server.

According to further aspect of the invention, a communications system, comprises:
a contents storing server for storing contents to be distributed;
a client for conducting the acquisition request of contents; and
a gateway that is placed between the contents storing server and the client, wherein the gateway is composed of means for selecting predetermined contents from contents that ware requested by the client in the past, and an autopilot means for accessing periodically the contents storing server regardless of whether there is a request from the client or not to acquire the selected contents, and when the acquisition of the distributed contents stored in the contents storing server is requested by the client, if the contents acquired by the autopilot means agree with that request, then the gateway distributes the contents in substitution for the contents storing server.

According to further aspect of the invention, a communications system, comprises:
a contents storing server for storing contents to be distributed;
a gateway that is composed of an autopilot storing means for acquiring periodically predetermined contents from the contents storing server and storing the contents into a predetermined storing area thereby conducting the update of contents, and a contents transmitting means for, when the acquisition of the distributed contents stored in the contents storing server is requested, if the contents acquired by the autopilot storing means agree with that request, then transmitting the contents to its requesting party, else acquiring the contents from the contents storing server and transmitting it to the party; and
a client that is composed of a normal contents acquisition requesting means for requesting the acquisition of contents through the gateway to the contents storing server, and an autopilot requesting means for requesting, to the gateway, that desired contents are stored, as the predetermined contents, in the predetermined storing area in the autopilot storing means.

### BRIEF DESCRIPTION OF THE DRAWINGS

The invention will be explained in more detail in conjunction with the appended drawings, wherein:
FIG. 1 is an illustration showing the between-devices connection used conventionally for downloading relatively large amount of contents;
FIG.2 is a block diagram showing the composition of the conventional communications system used to download contents;
FIG.3 is a diagram showing the procedures in acquiring contents using the conventional communications system;
FIG.4 is block diagram showing the schematic composition of a communications system in a first preferred embodiment according to the invention;
FIG.5 is a flow chart showing the outline of contents acquisition processing conducted in the first embodiment;
FIG.6 is a flow chart showing client-side contents virtual storage storing processing in the first embodiment;
FIG.7 is an explanatory diagram showing the correspondence between an assigned area of gateway storage and a virtual storage of client storage in the first embodiment;
FIG.8 is a flow chart showing gateway-side contents virtual storage storing processing in the first embodiment;
FIG.9 is a flow chart showing the outline of contents read processing in the first embodiment;
FIG.10 is a flow chart showing the detailed contents read processing at step S185 in FIG.9 by using a real storage in the first embodiment;
FIG.11 is a flow chart showing the detailed contents read processing at step S186 in FIG.9 by using the virtual storage in the first embodiment;
FIG.12 is a flow chart showing the contents read processing by the gateway in the first embodiment;
FIG.13 is a flow chart showing client-side contents read failure processing in the first embodiment;
FIG.14 is a flow chart showing the outline of contents delete processing in the first processing;
FIG.15 is a flow chart showing the detailed contents delete processing at step S285 in FIG.14 by using the real storage in the first embodiment;
FIG.16 is a flow chart showing the detailed contents delete processing at step S286 in FIG.14 by using the virtual storage in the first embodiment;
FIG.17 is a flow chart showing the contents delete processing by the gateway in the first embodiment;
FIG.18 is a flowchart showing contents delete failure processing by the client in the first embodiment;
FIG.19 is block diagram showing the schematic composition of a communications system in a second preferred embodiment according to the invention;
FIG.20 is a flow chart showing client-side contents virtual storage storing processing in the second embodiment;
FIG.21 is an explanatory diagram showing the correspondence between an assigned area of server storage and a virtual storage of client storage in the second embodiment;
FIG.22 is a flow chart showing server-side contents virtual storage storing processing in the second embodiment;
FIG 23 is a flow chart showing contents read processing, which corresponds to step S186 in FIG.9, by using a virtual storage in the second embodiment;
FIG.24 is a flow chart showing the contents read processing by the server in the second embodiment;
FIG.25 is a flow chart showing client-side contents read failure processing in the second embodiment;
FIG.26 is a flow chart showing contents delete processing by using the virtual storage in the second embodiment;
FIG.27 is a flow chart showing the server-side contents delete processing in the second embodiment;
FIG.28 is a flow chart showing client-side contents delete failure processing in the second embodiment;
FIG.29 is block diagram showing the schematic composition of a communications system in a third preferred embodiment according to the invention;
FIG.30 is a flow chart showing client-side contents acquisition processing in the third embodiment;
FIG.31 is a flow chart showing the outline of contents read processing in the third embodiment;
FIG.32 is a flow chart showing the outline of contents delete processing in the third processing;
FIG.33 is block diagram showing the schematic composition of a communications system in a fourth preferred embodiment according to the invention;
FIG.34 is a flow chart showing client-side contents acquisition processing in the fourth embodiment;
FIG.35 is block diagram showing the schematic composition of a communications system in a fifth preferred embodiment according to the invention;
FIG.36 is an explanatory diagram showing assignment in storing area of a client data storage in FIG.35;
FIG.37 is a front view showing a portable telephone, as a client, used in the fifth embodiment;
FIG.38 is a flow chart showing client-side processing for special communications service other than phone call in the fifth embodiment;
FIG. 39 is a plan view showing a menu image displayed on a display after setting the communications service mode in the fifth embodiment;
FIG.40 is a plan view showing a menu image displayed on the display when selecting an item 'INFORMATION' from the menu in FIG.39;
FIG.41 is a plan view showing a menu image displayed on the display when selecting an item 'ENTERTAIMENT' from the menu in FIG.40;
FIG.42 is a plan view showing a state when an item 'INTERNET' in FIG.39 is selected;
FIG.43 is a plan view showing a menu image displayed on the display when selecting the item 'INTERNET' from the menu in FIG.42;
FIG.44 is a plan view showing a menu image displayed on the display when selecting the item 'FAVORITES' from the menu in FIG.43;
FIG.45 is a plan view showing a menu image displayed on the display when selecting the item 'NEWS' from the menu in FIG.44;
FIG.46 is a flow chart showing URL access processing by the gateway in the fifth embodiment;
FIG.47 is a flow chart showing detailed history information search processing in the fifth embodiment;
FIG.48 is a flow chart showing history information renewal processing by the gateway in the fifth embodiment;
FIG.49 is a plan view showing a menu image displayed on the display when selecting the item 'CMM' from the menu in FIG.45;
FIG.50 is a plan view showing a menu image displayed on the display when selecting the item 'SPECIAL REPORT' from the menu in FIG.49;
FIG.51 is a plan view showing an example of movie playback in the fifth embodiment;
FIG.52 is block diagram showing the schematic composition of a communications system in a sixth preferred embodiment according to the invention;
FIG. 53 is a plan view showing a menu image displayed on a display after setting the communications service mode in the sixth embodiment;
FIG.54 is a plan view showing a menu image displayed on the display when selecting the item 'FILE PATROL SETTING' from the menu in FIG.53;
FIG.55 is a plan view showing a menu image displayed on the display when setting the file patrol in the sixth embodiment;
FIG.56 is a flow chart showing gateway-side autopilot processing base on request of the client in the sixth embodiment;
FIG. 57 is a flow chart showing data collection processing into history storage in the sixth embodiment;
FIG.58 is a flow chart showing data cleaning processing in the history storage in the sixth embodiment;
FIG.59 is a flow chart showing autopilot processing using data stored in the history storage in the sixth embodiment;
FIG.60 is an illustration showing an example of composition using WAP in the first to sixth embodiments; and
FIG.61 is an illustration showing an example of composition for acquiring directly HTML file from a server without through the gateway in the first to sixth embodiments.

### DESCRIPTION OF THE PREFERRED EMBODIMENTS

The preferred embodiments of the invention will be explained below.

### [1] First Embodiment

### [1-1] Outline of Communications System

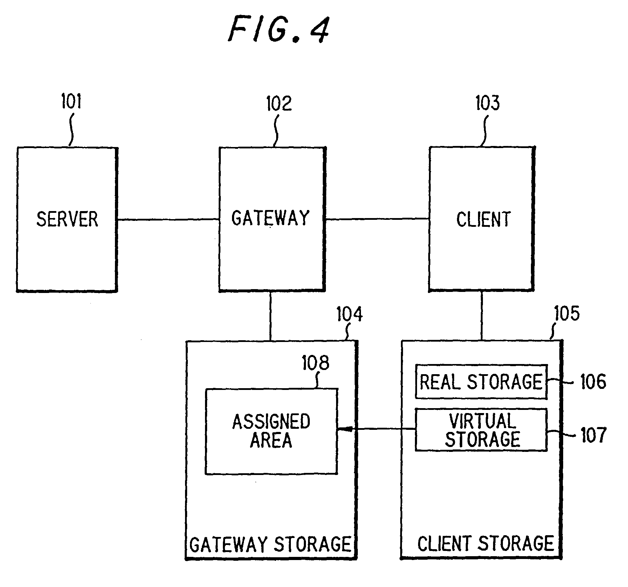

FIG.4 shows the schematic composition of a communications system in the first preferred embodiment according to the invention. The communications system comprises a server 101, such as a WWW (world wide web) server, that stores contents. The server 101 supplies a client 103 for WWW etc. with files and data (hereinafter referred to as contents generically) through a gateway 102.

Here, the gateway 102 serves to enable the communications between the server 101 and the client 103. The gateway 102 in this embodiment is a computer system that is composed of CPU (not shown) and a built-in gateway storage 104. Similarly, the client 103 is a computer system that is composed of CPU (not shown) and a built-in client storage 105. The client storage 105 is composed of a real storage 106 that is a storage to store contents and a virtual storage 107 that is a logical storage. The gateway storage 104 is composed of an assigned area 108 that is a storing area to store contents corresponding to the virtual storage 107.

The real storage 106 of the client storage 105 is an area where contents acquired from the server 101 are stored really. Meanwhile, contents include not only files but also programs and other data. Real contents are not stored into the virtual storage 107. Instead, real contents concerned are stored into the assigned area 108 of the gateway storage 104. Stored in the virtual storage 107 is only the pointer information such as address information etc. of real contents that are stored in the assigned area 108 of the gateway storage 104.

Thus, in the communications system in the first embodiment, since the memory capacity of the real storage 106 in the client storage 105 is small originally, for contents not storable in the real storage 106, only its pointer information is stored into the virtual storage 107 and the real contents are stored into the assigned area 108 of the gateway storage 104 correspondingly. Therefore, when the client 103 uses contents stored in the real storage 106, it can read them directly from the client storage 105. In contrast, when the client 103 uses contents stored in the assigned area 108 of the gateway storage 104, it needs to send a read request to the gateway 102.

In response to the read request, the gateway 102 acquires the pointer information about the read target stored in the virtual storage 107, returns contents information corresponding to the pointer information to the client 103. Based on the contents information acquired, the client 103 displays the acquired information or starts to run the program.

### [1-2] Storing of Contents

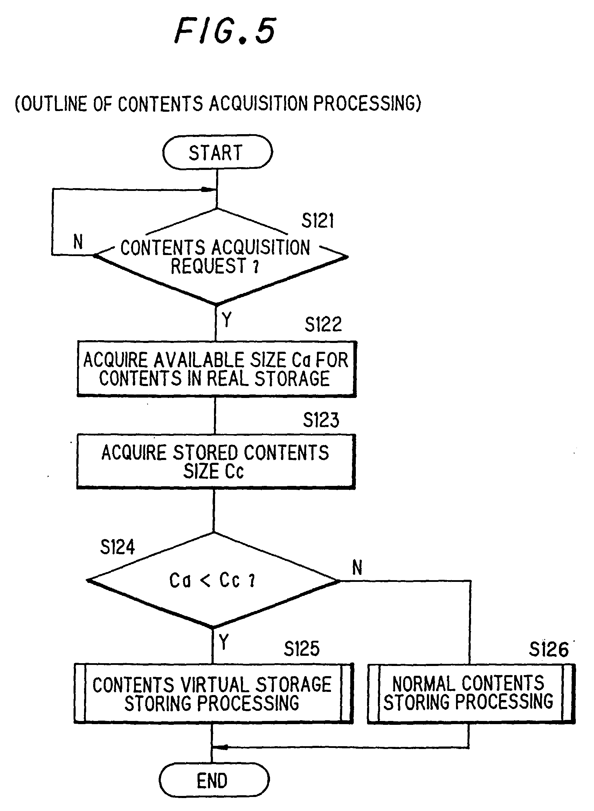

FIG.5 shows the outline of contents storing processing into client in the communications system in the first embodiment. When there occurs a contents acquisition request (step S121:Y), the client 103 in FIG.4 acquires contents-available size Ca capable of storing newly contents in the real storage 106 of the client storage 105 (step S122). Then, the client 103 acquires the size Cc of contents to be saved (step S123). If such a size is known in advance, for example, there is provided a table to indicate the kind and size of contents, then the contents may be selected from the table to acquire it from the server 101. This selection can be conducted using an input means (not shown), such as a keyboard, provided for the client 103.

However, in normal case, the acquisition request of specific contents acquisition request is conducted while accessing the server 101 actually. So, in this case, when the download of contents is requested, the contents size Cc is notified from the server 101. The client 103 judges which size is bigger (step S124). In the result, if the size Cc of contents to be saved is bigger than the available size Ca (Y), then the contents are not stored into the real storage 106, and the contents virtual storage storing processing is instead conducted (step S125). If not so, since the storing of contents into the real storage 106 is allowed, the normal contents storing processing is conducted (step S126). The normal contents storing processing at step S126 is the same as the conventional processing in FIG.3. Therefore, the explanation about this processing is omitted here.

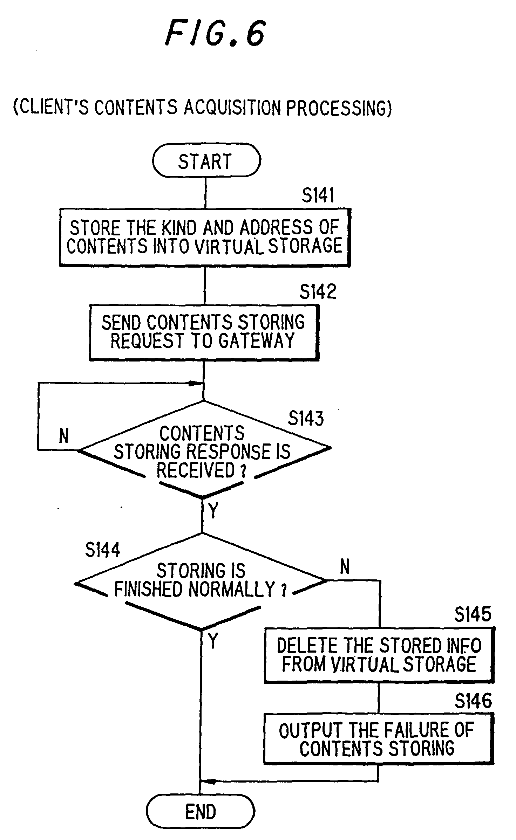

FIG.6 shows client-side processing of the contents virtual storage storing processing that contents are stored using the virtual storage. If the contents virtual storage storing processing at step S125 in FIG.5 starts, then the client 103 stores the kind of contents to be stored and the address for storing the contents into the assigned area 108 (FIG.4) into the virtual storage 107 (step S141). Here, the address may be composed of a start address for starting the storing of contents and an end address, or composed of the start address and the size Cc of contents stored. When the contents are stored astride multiple areas in the virtual storage 107, the respective addresses may be stored therein.

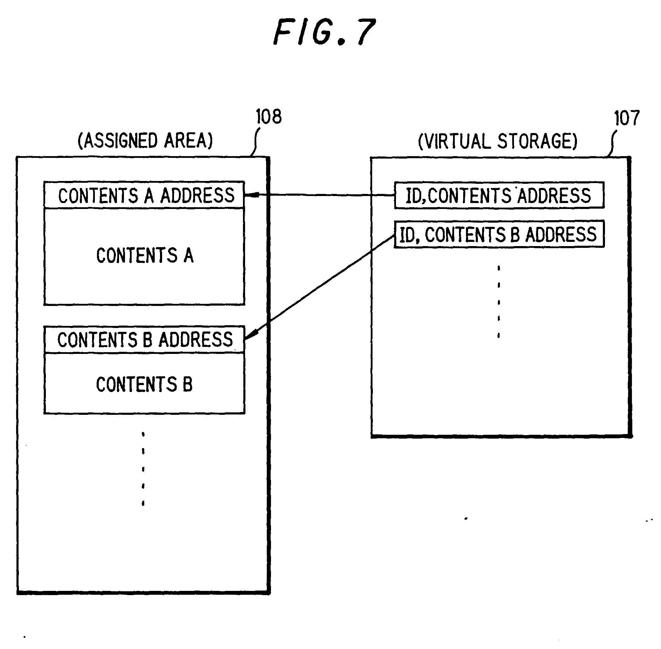

FIG.7 shows the correspondence between the assigned area 108 of the gateway storage 104 and the virtual storage 107 of the client storage 105. The kind of contents is represented as contents A, contents B, ... . In the virtual storage 107, information (ID) to identify contents A, contents B, ... and the contents addresses are stored. In the assigned area 108 of the gateway storage 104, contents A, contents B, ... are stored corresponding to the respective contents addresses.

Returning to FIG.6, the explanation is continued. If the necessary information about the contents is stored into the virtual storage 107, the client 103 sends the contents storing request through the gateway 102 to the server 101 (step S142). Then, it waits for that the contents storing response to inform the result of contents storing to this request is received (step S143).

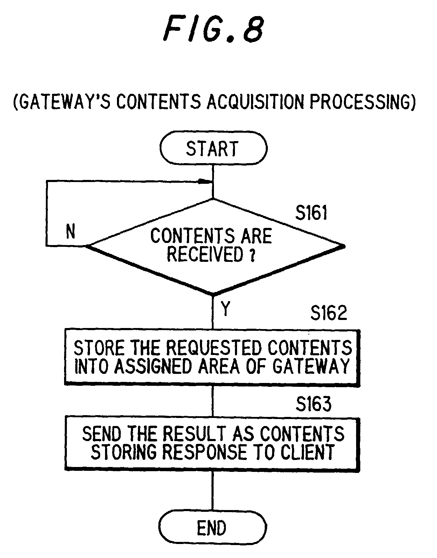

FIG.8 shows gateway-side processing of the contents virtual storage storing processing. If the contents storing request is sent out at step S142 in FIG.6 and the server 101 makes a response to this, then the contents concerned are sent from the server 101 to the gateway 102. If the gateway 102 receives the contents (step S161:Y), then, although conventionally these are converted properly and then sent to the client 103, in this embodiment these are stored into the assigned area 108 (step S162). The address into which the contents are stored is, of course, the same as the address stored in the virtual storage 107, as described in FIG.7.

If the contents required are stored in the assigned area 108, then the gateway 102 sends the result, as the contents storing response, to the client 103 (step S163). Also when the storing is not finished normally due to some reason, or when all or part of the address stored is not identical with the corresponding address stored in the virtual storage 107, such a result may be sent as the contents storing response.

On the other hand, if the client 103 receives the contents storing response (step S143:Y), then it is checked whether the storing is finished normally or not (step S144). If the storing is finished normally (Y), then the processing of storing the contents virtually is finished safely (end).

On the contrary, if the storing is not finished normally due to some reason, then the information about the contents stored in the virtual storage 107 at step S141 is deleted (step S145). Then, the failure of contents storing is displayed on a display (not shown) such as CRT in the client 103 (step S146). Instead of such visual displaying, the failure may be notified by outputting alarm speech or by printing out a sheet of paper.

Meanwhile, as described earlier, also when the address stored in the assigned area 108 is not identical with the corresponding address stored in the virtual storage 107, such a result may be sent as the contents storing response. To this response, although not shown in FIG.6, the client 103 only has to correct the address stored in the virtual storage 107. Also, to get the correspondence between the addresses, for example, at step S141 writing only the kind of contents into the virtual storage 107, the address information may be added to it at the time when the address is definitely determined. Alternatively, every time when the contents are written into new part of the assigned area 108, the address can be temporally in parallel written into the virtual storage 107.

### [1-3] Reading of Contents

After the contents are stored from the server 101 into the real storage 106 or the assigned area 108, the client 103 conducts necessary processing using them.

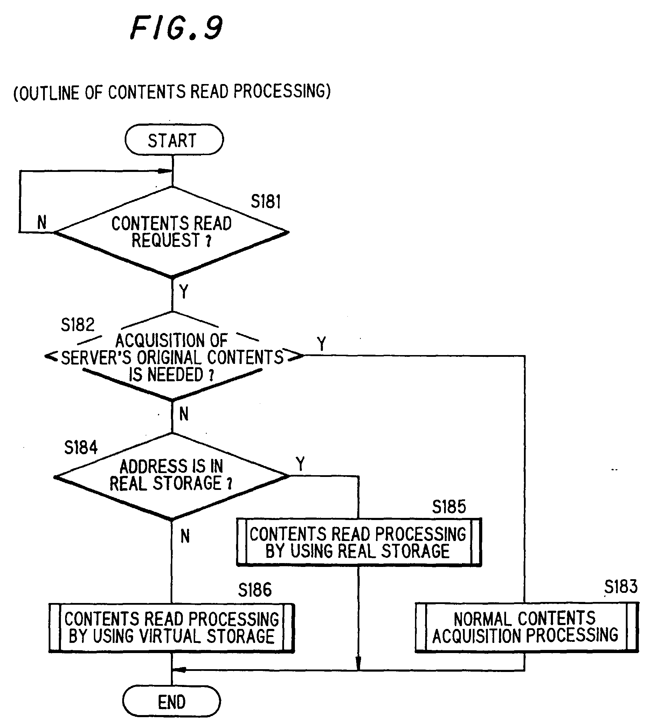

FIG.9 shows the outline of client-side contents read processing after the storing. When there occurs a contents read request based on an instruction etc. of operator (step S181:Y), the client 103 judges whether the original contents in the server 101 need to be read or not (step S182). Here, the original contents mean contents existing currently in the server 101. There are some reasons why the original contents in the server 101 are read. For example, in case of news contents, since the contents stored may be already old ones, it is necessary to acquire the original contents from the server 101 to get the latest contents. In addition, when the address of the contents does not exist in the real storage 106 or the virtual storage 107, it is also necessary to acquire the original contents from the server 101. If the contents acquisition processing, described earlier, by the client 103 is done successfully, then the address of the contents must exist. However, the address of the contents may be lost due to the delete processing, explained later, or some reason. In such a case, the normal contents acquisition processing is conducted (step S183). Namely, the contents acquisition request in FIG.5 is generated (step S121), thereby the processing after step S122 starts.

On the other hand, if it is judged that the acquisition of original contents from the server 101 is not necessary (N), then it is judged whether the address is stored in the real storage 106 or not (step S184). If it is stored in the real storage 106 (Y), then the contents read processing is conducted using the real storage 106 (step S185). Also, when the address of the contents is stored in the virtual storage 107 (step S184:N), then the contents read processing is conducted using the virtual storage 107 (step S186).

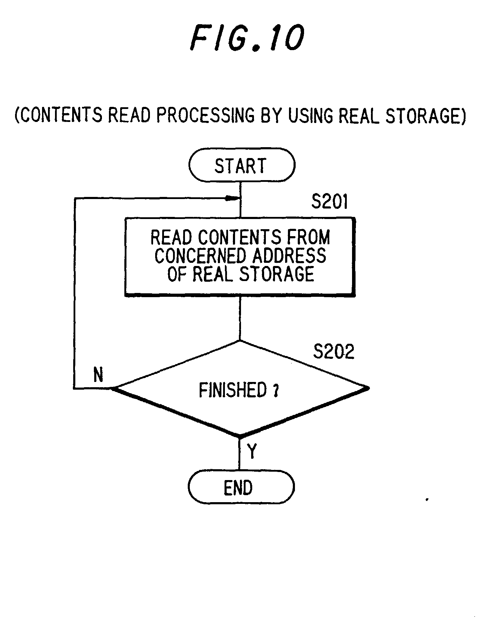

FIG. 10 shows the contents read processing using the real storage 106 at step S185 in FIG.9. This is the same as the conventional processing. Namely, the contents are read from the real storage 106 by using the address of the contents (step S201), and when the reading is finished (step S202:Y), the processing is completed (end).

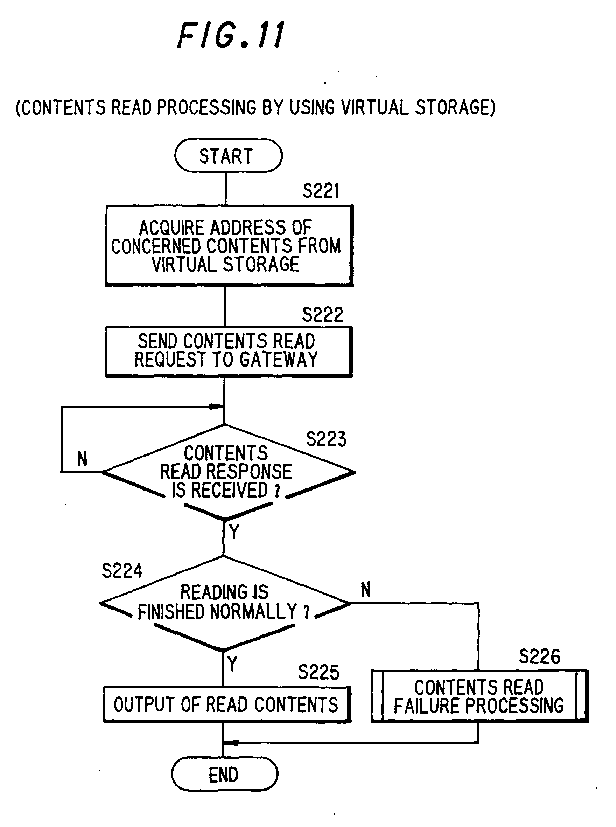

FIG.11 shows the contents read processing using the virtual storage 107 at step S186 in FIG.9. In this case, the CPU in the client 103 acquires the address of concerned contents from the virtual storage 107 in the client storage 105 (step S221). Then, the contents read request accompanied with this address is sent to the gateway 102 (step S222). Then, the client 103 waits for the response from the gateway 102 (step S223).

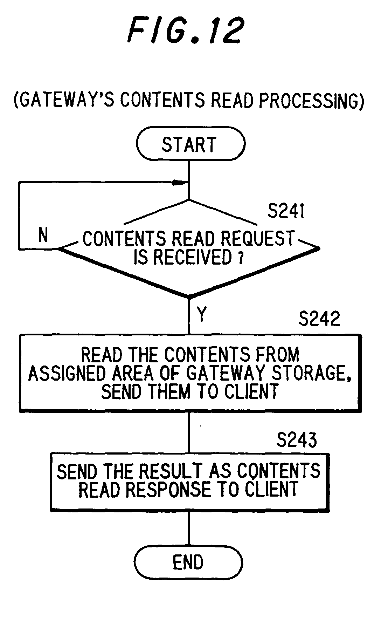

FIG.12 shows the gateway-side contents read processing to this request. The CPU of the gateway 102 monitors a contents read request sent from the client 103 side (step S241). If the contents read request is received (Y), then the contents are read from the assigned area 108 and sent to the client 103 (step S242). In reading the contents, the address information of the contents sent together is used. After the output of the contents is finished, the result is sent as the contents read response to the client 103 (step S243). Also when there occurs an error, e.g., when the concerned contents do not exist, the result is sent as the contents read response.

Returning to FIG.11, the explanation is continued. If the contents read response is sent from the gateway 102 (step S223), the client 103 analyzes this and judges whether the contents requested are sent normally or not (step S224). In this check, it is desirable that the client 103 checks the normality of data as well as analyzing the content of the contents read response. If it is judged that the contents are sent normally (Y), then the contents read are output to necessary part (step S225). Meanwhile, the contents read processing at the client 103 side is different from the contents acquisition and storing processing explained in FIG.5, an area other than the real storage 106 in Fig.4 is assigned as part to store the contents until the contents are output.

If at step S224 the reading of contents is not finished normally, its contents read failure processing, explained below, is conducted (step S226).

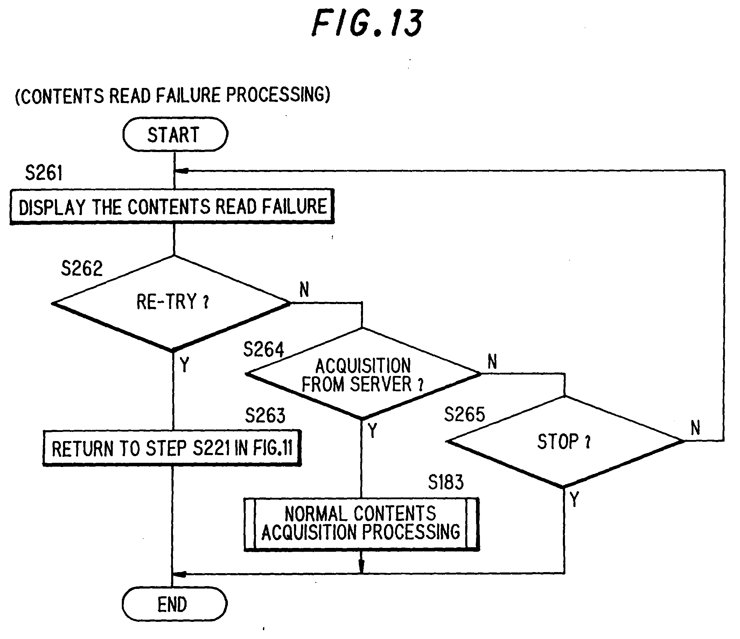

FIG.13 shows the contents read failure processing conducted at the client 103 side. In this processing, at first, the failure of the contents reading is displayed using the display of the client 103 (step S261). In addition to this, the options of solution are displayed. When the operator chooses "re-try" (step S262:Y), the contents read processing is conducted again using the gateway 102. Therefore, the processing returns to step S221 in FIG. 11 (step S263).

On the other hand, when the re-try goes for nothing due to some defect etc. occurred in the gateway 102 side, to acquire the contents from the server 101 again and read them may be instructed. In this case (step S264:Y), the normal contents acquisition processing in FIG.9 is conducted (step S183). Namely, the contents acquisition request (step S121) in FIG.5 is generated, then the processing after step S122 starts. Different from this, if the stop of contents reading is instructed (step S265:Y), then the processing is finished without reading the contents (end).

### [1-4] Deletion of Contents Stored

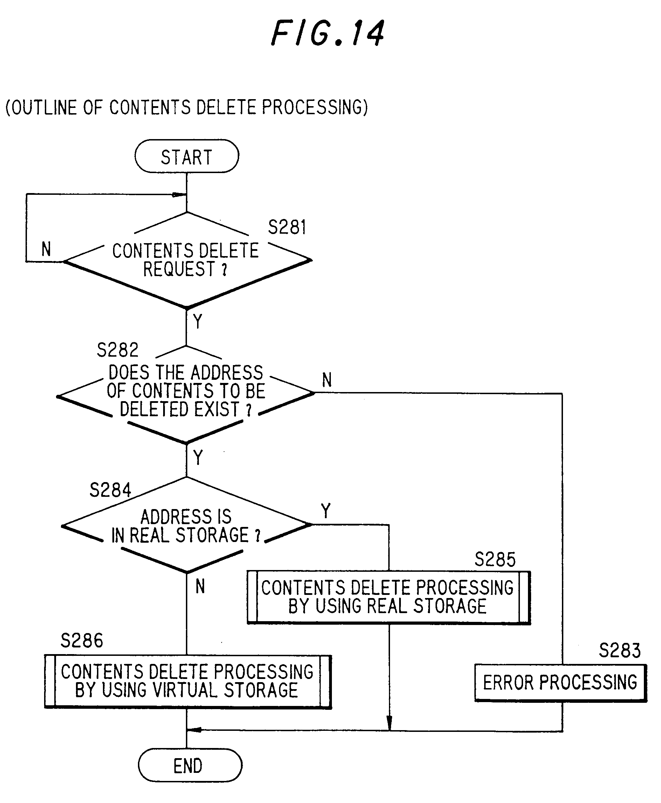

FIG.14 shows processing in a case that contents stored in the client 103 side become unnecessary and therefore they are deleted. When a contents delete request that requests the deletion of specific contents occurs based on an instruction of operator etc. (step S281:Y), the client 103 judges whether the address of the contents exists or not (step S282). In detail, it is checked whether the concerned contents exist in the real storage 106, and if existing, then the address is acquired. If the concerned contents do not exist, then it is checked whether the kind of the concerned contents is registered in the virtual storage 107. If registered, then the address is acquired. If the address of the concerned contents does not anywhere (N), then the error processing is conducted (step S283).

On the other hand, when the address exists, it is judged whether the address of the contents is stored in the real storage 106 or not (step S284). If stored in the real storage 106 (Y), then the contents delete processing is conducted using the real storage 106 (step S285). Also, if the address of the contents is stored in the virtual storage 107 (step S284:N), then the contents delete processing is conducted using the virtual storage 107 (step S286).

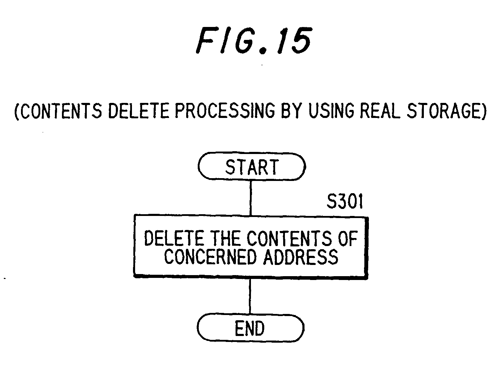

FIG.15 shows the contents delete processing using the real storage 106 at step S285. In this case, the contents are stored in the real storage 106 of the client storage 105. So, similarly to the conventional processing, the contents of the concerned address can be deleted (step S301).

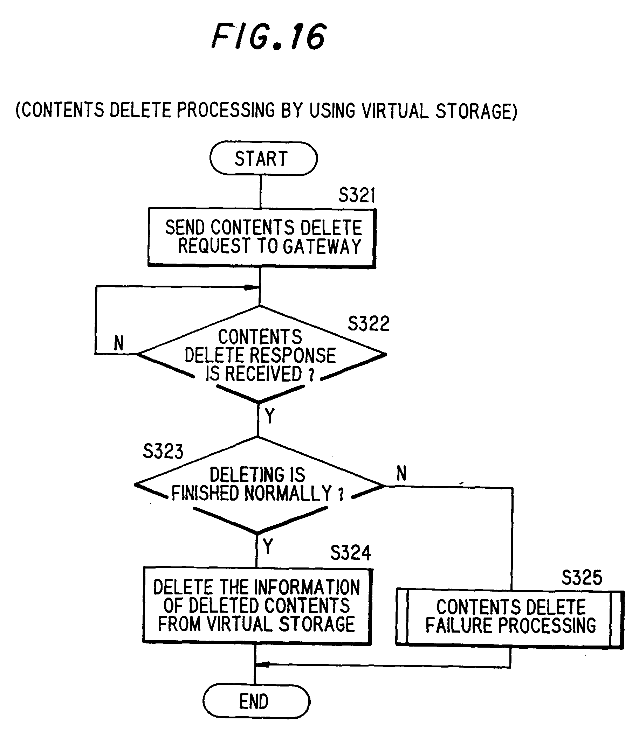

FIG.16 shows the contents delete processing using the virtual storage 107 at step S286 in FIG.14. In this case, the CPU of the client 103 sends the contents delete request accompanied with the address of the concerned contents acquired from the virtual storage 107 of the client storage 105 to the gateway 102 (step S321). Then, the client 103 waits for the response from the gateway 102 (step S322).

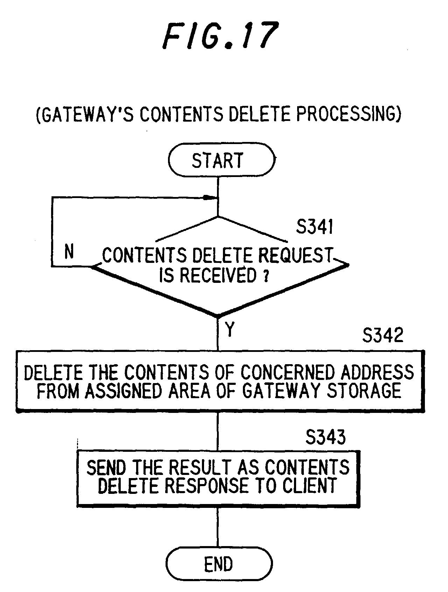

FIG.17 shows the contents delete processing conducted at the gateway 102 side. The CPU of the gateway 102 monitors the contents delete request sent from the client 103 side (step S341). If the contents delete request is received (Y), then the contents of concerned address are deleted from the assigned area 108 (step S342). Then, the result is sent as the contents delete response to the client 103 (step S343). Also when there occurs an error, e.g., when the address of concerned contents does not exist, the result is sent as the contents read response.

Returning to FIG.16, the explanation is continued. If the contents delete response is sent from the gateway 102 (step S322), the client 103 analyzes this and judges whether the contents requested are deleted normally or not (step S323). If it is judged that the contents are deleted normally (Y), then the corresponding information (the kind and address) of the contents is deleted from the virtual storage 107 (step S324). Also, if it is judged that some error occurs in the deletion of the contents in the gateway 102 (step S323:N), then the contents delete failure processing is conducted (step S325).

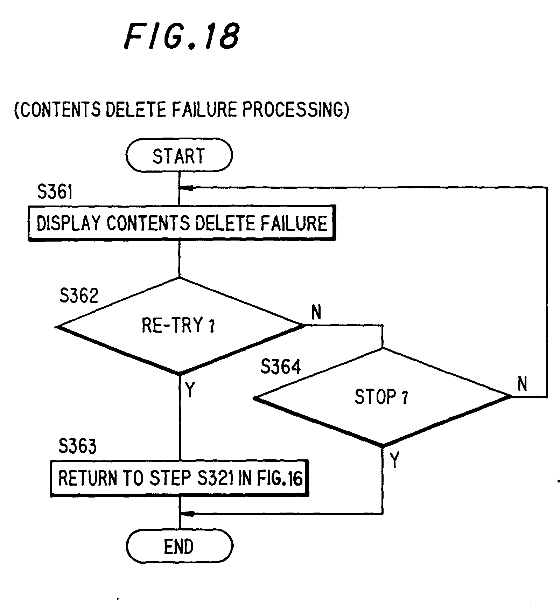

FIG.18 shows the contents delete failure processing conducted at the client 103 side. In this processing, at first, the failure of the contents deletion is displayed using the display of the client 103 (step S361). In addition to this, the options of solution are displayed. When the operator chooses "re-try" (step S362:Y), the contents delete processing is conducted again using the gateway 102. Therefore, the processing returns to step S321 in FIG.16 (step S363).

On the other hand, if the stop of contents deletion is instructed (step S364:Y), then the processing is finished without deleting the contents (end). In this case, not only the deletion from the assigned area 108 but also the deletion of the corresponding information of the contents from the virtual storage 107 are not conducted.

Although in the first embodiment the address of contents is added to the contents acquisition request that is sent from the client 103 to the gateway 102, the invention is not limited to this embodiment. For example, when the contents acquisition request is received, the gateway 102 may acquire the address of contents from the virtual storage 107. The same applies to the contents read processing and the contents delete processing.

### [2] Second Embodiment

### [2-1] Outline of Communications System

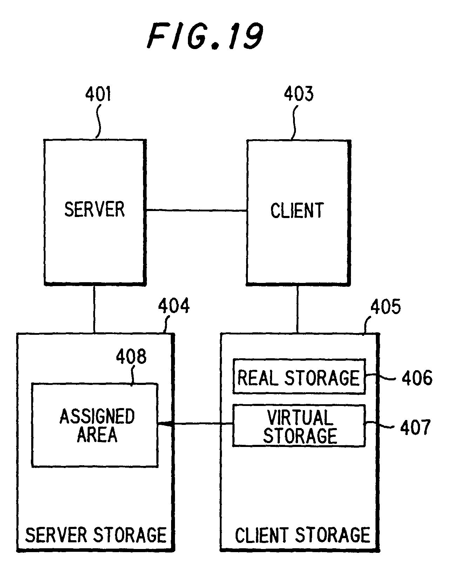

FIG.19 shows the schematic composition of a communications system in the second preferred embodiment according to the invention. The communications system comprises a server 401, such as a WWW (world wide web) server, that stores contents. The server 401 is able to directly communicate with a client 403. The server 401 in this embodiment is a computer system that is composed of CPU (not shown) and a built-in server storage 404. Similarly, the client 403 is a computer system that is composed of CPU (not shown) and a built-in client storage 405. The client storage 405 is composed of a real storage 406 that is a storage to store contents and a virtual storage 407 that is a logical storage. The server storage 404 is composed of an assigned area 408 that is a storing area to store contents corresponding to the virtual storage 407.

The real storage 406 of the client storage 405 is an area where contents acquired from the server 401 are stored really. Meanwhile, contents include not only files but also programs and other data. Real contents are not stored into the virtual storage 407. Instead, real contents concerned are stored into the assigned area 408 of the server storage 404. Stored in the virtual storage 407 is only the pointer information such as address information etc. of real contents that are stored in the assigned area 408 of the server storage 404.

Thus, in the communications system in the second embodiment, since the memory capacity of the real storage 406 in the client storage 405 is small originally, for contents not storable in the real storage 406, only its pointer information is stored into the virtual storage 407 and the real contents are stored into the assigned area 408 of the server storage 404 correspondingly. Therefore, when the client 403 uses contents stored in the real storage 406, it can read them directly from the client storage 405. In contrast, when the client 403 uses contents stored in the assigned area 408 of the server storage 404, it needs to send a read request to the server 401.

In response to the read request, the server 401 acquires the pointer information about the read target stored in the virtual storage 407, returns contents information corresponding to the pointer information to the client 403. Based on the contents information acquired, the client 403 displays the acquired information or starts to run the program.

### [2-2] Storing of Contents

The control in the first embodiment in FIG.5 can apply, as is, to the outline of contents storing processing into client in the communications system in the second embodiment. However, here in the second embodiment, the server 101 is to be read replaced by the server 401, and the client 103 is to be read replaced by the client 403. In like manner, the real storage 106 in the client storage 105 is to be read replaced by the real storage 406 in the client storage 405, and the virtual storage 107 is to be read replaced by the virtual storage 407. Furthermore, the assigned area 108 in the gateway storage 104 is to be read replaced by the assigned area 408 in the server storage 404.

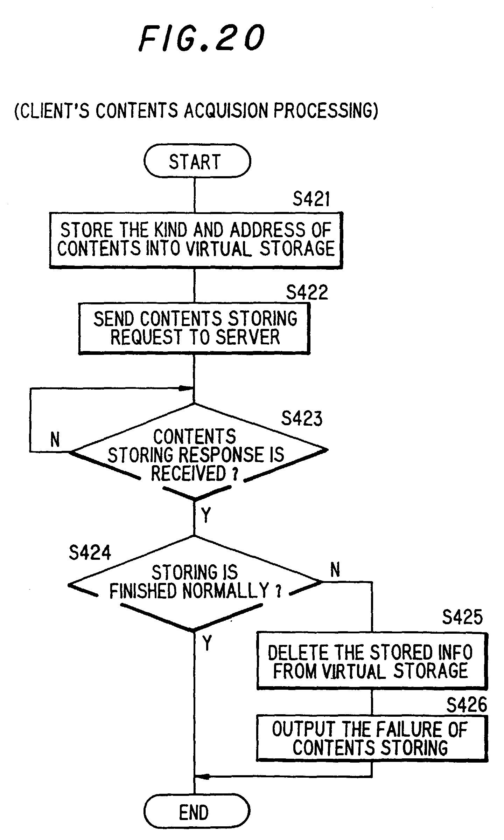

FIG.20 shows, in the second embodiment, client-side processing of the contents virtual storage storing processing that contents are stored using the virtual storage. If the contents virtual storage storing processing at step S125 in FIG.5 starts, then the client 403 stores the kind of contents to be stored and the address for storing the contents into the assigned area 408 (FIG.19) into the virtual storage 407 of the server 401 (step S421). Here, the address maybe composed of a start address for starting the storing of contents and an end address, or composed of the start address and the size Cc of contents stored. When the contents are stored astride multiple areas in the virtual storage 407, the respective addresses may be stored therein.

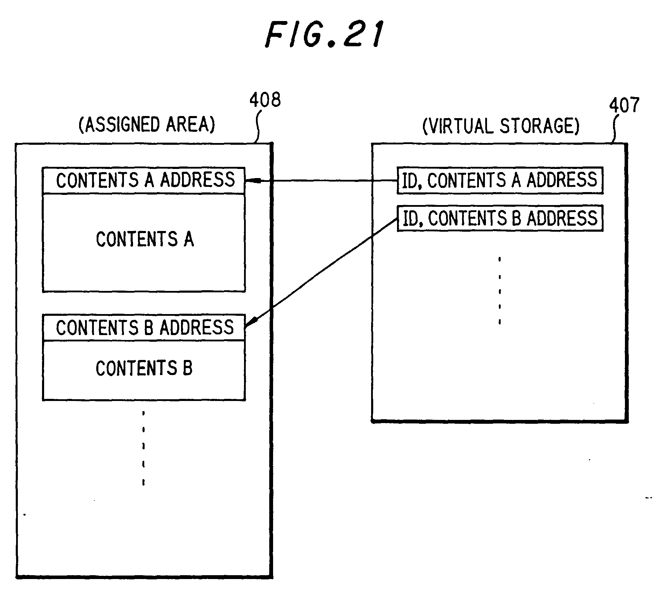

FIG.21 shows the correspondence between the assigned area 408 of the server 401 and the virtual storage 407 of the client storage 405. Similarly to the first embodiment, the kind of contents is represented as contents A, contents B, ... . In the virtual storage 407, information (ID) to identify contents A, contents B, ... and the contents addresses are stored. In the assigned area 408 of the server storage 404, contents A, contents B, ... are stored corresponding to the respective contents addresses.

Returning to FIG.20, the explanation is continued. If the necessary information about the contents is stored into the virtual storage 407, the client 403 sends the contents storing request directly to the server 401 (step S422). Then, it waits for that the contents storing response to inform the result of contents storing to this request is received (step S423).

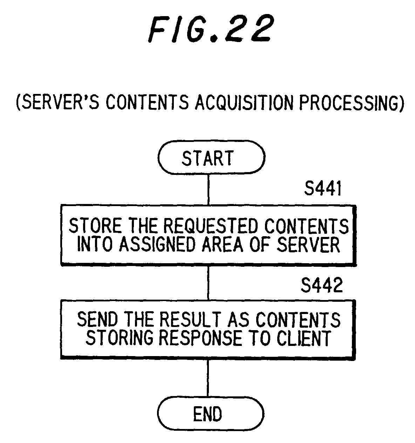

FIG.22 shows server-side processing of the contents virtual storage storing processing. If the contents storing request is sent out at step S422 in FIG.20, then the server 401 stores the contents owned by itself into the assigned area 408 of the server storage 404 (step S441). The address into which the contents are stored is, of course, the same as the address stored in the virtual storage 407, as described in FIG.7.

If the contents required are stored in the assigned area 408, then the server 401 sends the result, as the contents storing response, to the client 103 (step S442). Also when the storing is not finished normally due to some reason, or when all or part of the address stored is not identical with the corresponding address stored in the virtual storage 407, such a result may be sent as the contents storing response.

On the other hand, if the client 403 receives the contents storing response (step S423:Y), then it is checked whether the storing is finished normally or not (step S424). If the storing is finished normally (Y), then the processing of storing the contents virtually is finished safely (end).

On the contrary, if the storing is not finished normally due to some reason, then the information about the contents stored in the virtual storage 407 at step S421 is deleted (step S425). Then, the failure of contents storing is displayed on a display (not shown) such as CRT in the client 403 (step S426). Instead of such visual displaying, the failure may be notified by outputting alarm speech or by printing out a sheet of paper.

Meanwhile, as described earlier, also when the address stored in the assigned area 408 is not identical with the corresponding address stored in the virtual storage 407, such a result may be sent as the contents storing response. To this response, although not shown in FIG.20, the client 403 only has to correct the address stored in the virtual storage 407. Also, to get the correspondence between the addresses, for example, at step S421 writing only the kind of contents into the virtual storage 407, the address information may be added to it at the time when the address is definitely determined. Alternatively, every time when the contents are written into new part of the assigned area 408, the address can be temporally in parallel written into the virtual storage 407.

### [2-3] Reading of Contents

The read processing of contents acquired in the second embodiment will be explained below.

The control in the first embodiment in FIG.9 can apply, as is, to the outline of contents read processing in the communications system in the second embodiment. So the explanation is omitted here. However, in the control in FIG.9, the numerals of client 403 etc. are to be read replaced properly. Meanwhile, the details of the contents read processing by using the real storage at step S185 in FIG.9 are as shown in FIG.10, and are the same as the conventional processing. So, the explanation of this processing is also omitted here.

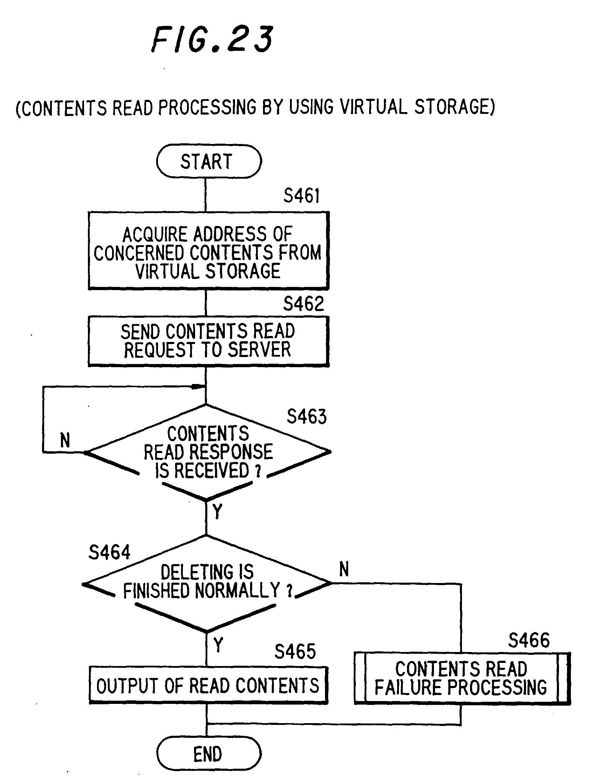

FIG.23 shows the contents read processing using the virtual storage 407 corresponding to step S186 in FIG.9. In this case, the CPU in the client 403 acquires the address of concerned contents from the virtual storage 407 in the client storage 405 (step S461). Then, the contents read request accompanied with this address is sent to the server 401 (step S462). Then, the client 403 waits for the response from the server 401 (step S463).

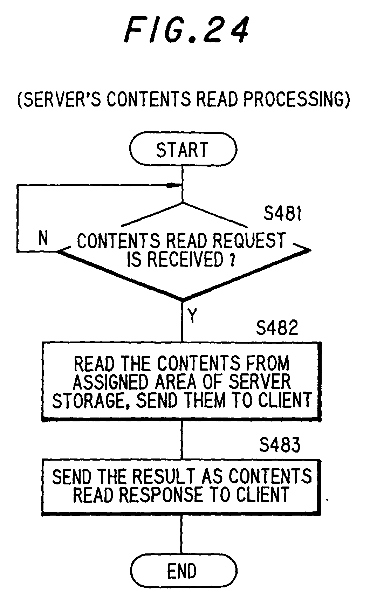

FIG.24 shows the server-side contents read processing to this request. The CPU of the server 401 monitors a contents read request sent from the client 403 side (step S481). If the contents read request is received (Y), then the contents are read from the assigned area 408 and sent to the client 403 (step S482). In reading the contents, the address information of the contents sent together is used. After the output of the contents is finished, the result is sent as the contents read response to the client 403 (step S483). Also when there occurs an error, e.g., when the concerned contents do not exist, the result is sent as the contents read response.

Returning to FIG.23, the explanation is continued. If the contents read response is sent from the server 401 (step S463), the client 403 analyzes this and judges whether the contents requested are sent normally or not (step S464). In this check, it is desirable that the client 403 checks the normality of data as well as analyzing the content of the contents read response. If it is judged that the contents are sent normally (Y), then the contents read are output to necessary part (step S465). Meanwhile, the contents read processing at the client 403 side is different from the contents acquisition and storing processing explained earlier, an area other than the real storage 406 in Fig.19 is assigned as part to store the contents until the contents are output.

If at step S464 the reading of contents is not finished normally, its contents read failure processing, explained below, is conducted (step S466).

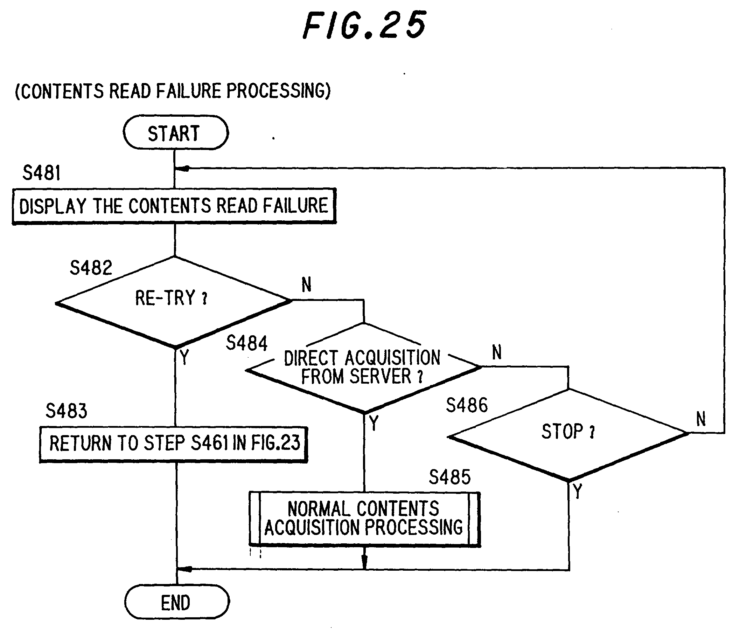

FIG.25 shows the contents read failure processing conducted at the client 403 side. In this processing, at first, the failure of the contents reading is displayed using the display of the client 403 (step S481). In addition to this, the options of solution are displayed. When the operator chooses "re-try" (step S482:Y), the contents read processing is conducted again using the server 401. Therefore, the processing returns to step S461 in FIG.23 (step S483).

On the other hand, when the re-try goes for nothing due to some defect etc. occurred in the server 401 side, to acquire the contents from the server 401 again and read them may be instructed. In this case (step S484:Y), the normal contents acquisition processing is conducted (step S485). Namely, as the corresponding processing in FIG.5, the contents acquisition request is sent to the server 401, the contents acquired is, as is, read by the client 403. Different from this, if the stop of contents reading is instructed (step S486:Y), then the processing is finished without reading the contents (end).

### [2-4] Deletion of Contents Stored

The delete processing of contents acquired in the second embodiment will be explained below.

The control in the first embodiment in FIG.14 can apply, as is, to the outline of contents delete processing in the communications system in the second embodiment. So the explanation is omitted here. However, in the control in FIG.14, the numerals of client 403 etc. are to be read replaced properly. Also, FIG.15 can apply, as is, to the contents delete processing by using the real storage 405, therefore the illustration and explanation of this processing are also omitted here.

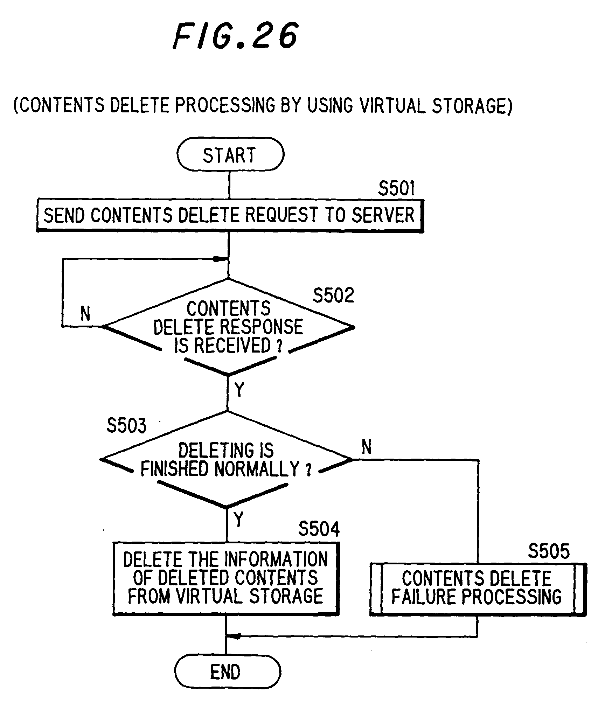

FIG.26 shows the contents delete processing using the virtual storage 407. In this case, the CPU of the client 403 sends the contents delete request accompanied with the address of the concerned contents acquired from the virtual storage 407 of the client storage 405 to the server 401 (step S501). Then, the client 403 waits for the response from the server 401 (step S502).

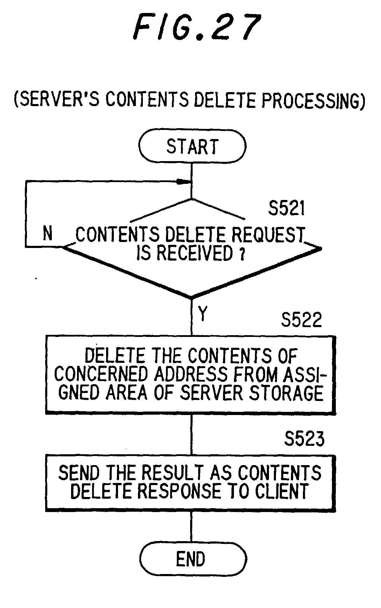

FIG.27 shows the contents delete processing conducted at the server 401 side. The CPU of the server 401 monitors the contents delete request sent from the client 403 side (step S521). If the contents delete request is received (Y), then the contents of concerned address are deleted from the assigned area 408 (step S522). Then, the result is sent as the contents delete response to the client 403 (step S523). Also when there occurs an error, e.g., when the address of concerned contents does not exist, the result is sent as the contents read response.

Returning to FIG.26, the explanation is continued. If the contents delete response is sent from the server 401 (step S502), the client 403 analyzes this and judges whether the contents requested are deleted normally or not (step S503). If it is judged that the contents are deleted normally (Y), then the corresponding information (the kind and address) of the contents is deleted from the virtual storage 407 (step S504). Also, if it is judged that some error occurs in the deletion of the contents in the server 403 (step S503:N), then the contents delete failure processing is conducted (step S505).

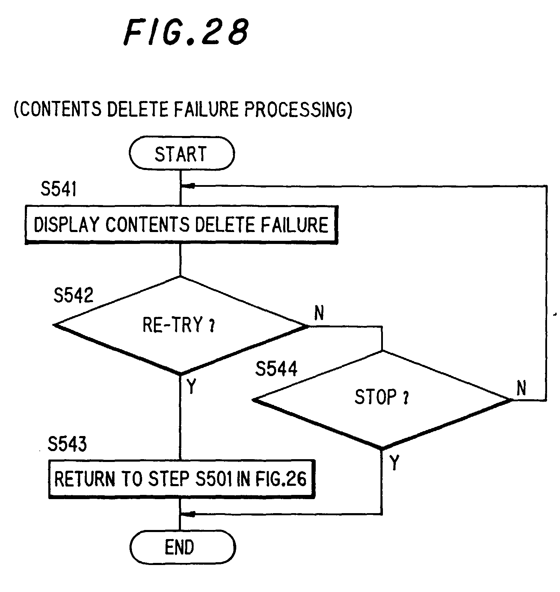

FIG.28 shows the contents delete failure processing conducted at the client 403 side. In this processing, at first, the failure of the contents deletion is displayed using the display of the client 403 (step S541). In addition to this, the options of solution are displayed. When the operator chooses "re-try" (step S542:Y), the contents delete processing is conducted again using the server 401. Therefore, the processing returns to step S501 in FIG.26 (step S543).

On the other hand, if the stop of contents deletion is instructed (step S544:Y), then the processing is finished without deleting the contents (end). In this case, not only the deletion from the assigned area 408 but also the deletion of the corresponding information of the contents from the virtual storage 407 are not conducted.

Although in the second embodiment the address of contents is added to the contents acquisition request that is sent from the client 403 to the server 401, the invention is not limited to this embodiment. For example, when the contents acquisition request is received, the server 401 may acquire the address of contents from the virtual storage 407. The same applies to the contents read processing and the contents delete processing.

### [3] Third Embodiment

### [3-1] Outline of Communications System

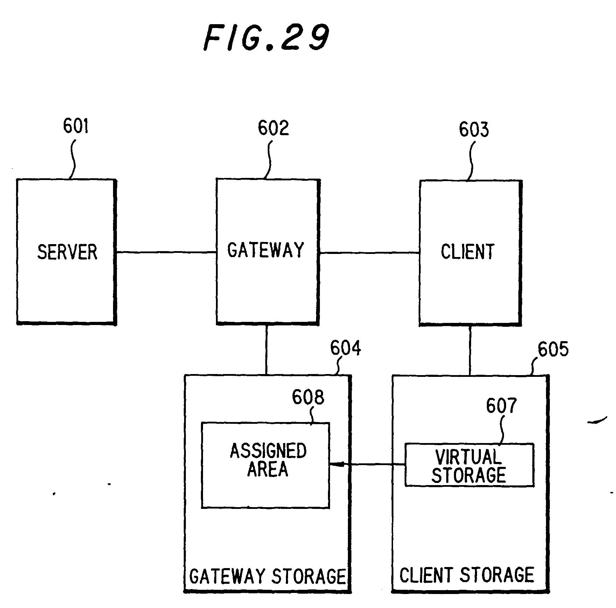

FIG.29 shows the schematic composition of a communications system in the third preferred embodiment according to the invention. The communications system comprises a server 601, such as a WWW (world wide web) server, that stores contents. The server 601 supplies a client 603 for WWW etc. with files and data (hereinafter referred to as contents generically) through a gateway 602.

Here, the gateway 602 serves to enable the communications between the server 601 and the client 603. The gateway 602 in this embodiment is a computer system that is composed of CPU (not shown) and a built-in gateway storage 604. Similarly, the client 603 is a computer system that is composed of CPU (not shown) and a built-in client storage 605. The client storage 605 is provided with a virtual storage 607 that is a logical storage, but is not provided with the real storage as in the first and second embodiments. The gateway storage 604 is composed of an assigned area 608 that is a storing area to store contents corresponding to the virtual storage 607.

Real contents are not stored into the virtual storage 607. Instead, real contents concerned are stored into the assigned area 608 of the gateway storage 604. Stored in the virtual storage 607 is only the pointer information such as address information etc. of real contents that are stored in the assigned area 608 of the gateway storage 604.

Thus, in the communications system in the third embodiment, since the memory capacity of the client storage 605 is small originally, for contents, only its pointer information is stored into the virtual storage 607 and the real contents are stored into the assigned area 608 of the gateway storage 604 correspondingly. Therefore, when the client 603 uses the contents, it needs to send a read request to the gateway 602.

In response to the read request, the gateway 602 acquires the pointer information about the read target stored in the virtual storage 607, returns contents information corresponding to the pointer information to the client 603. Based on the contents information acquired, the client 603 displays the acquired information or starts to run the program.

### [3-2] Storing of Contents

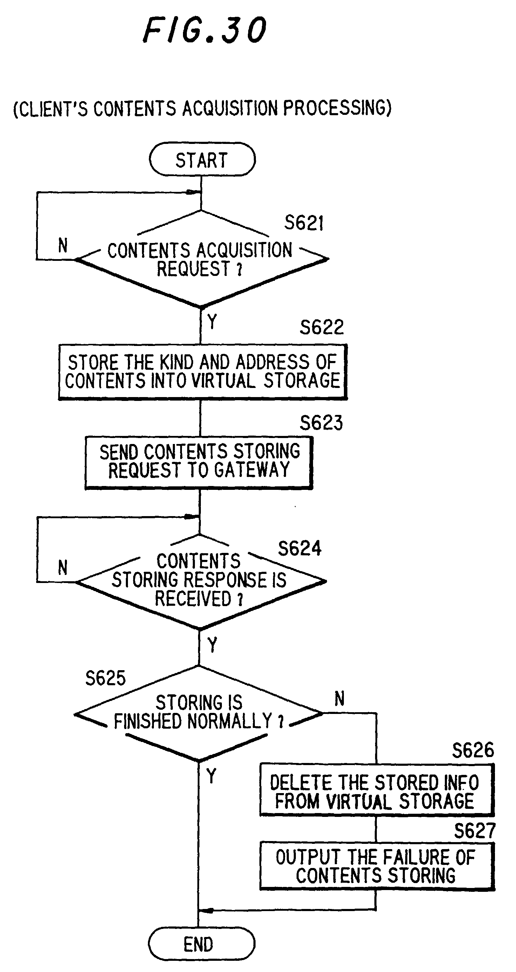

FIG.30 shows client-side processing of the contents virtual storage storing processing that contents are stored using the virtual storage. When there occurs a contents acquisition request (step S621:Y), the client 603 stores the kind of contents to be stored and the address for storing the contents into the assigned area 608 (FIG.29) into the virtual storage 607 (step S622). When the contents are stored astride multiple areas in the virtual storage 607, the respective addresses may be stored therein. The correspondence between the assigned area 608 of the gateway storage 604 and the virtual storage 607 of the client storage 605 is similar to that shown in FIG.7 in the first embodiment. However, the virtual storage 107 is to be read replaced by the virtual storage 607 and the assigned area 108 is to be read replaced by the assigned area 608.

If the necessary information about the contents is stored into the virtual storage 607, the client 603 sends the contents storing request through the gateway 602 to the server 601 (step S623). Then, it waits for that the contents storing response to inform the result of contents storing to this request is received (step S624). Here, since the gateway-side processing of the contents virtual storage storing processing is the same as that shown in FIG.8, in the first embodiment, the explanation is omitted here.

If the client 603 receives the contents storing response (step S624:Y), then it is checked whether the storing is finished normally or not (step S625). If the storing is finished normally (Y), then the processing of storing the contents virtually is finished safely (end).

On the contrary, if the storing is not finished normally due to some reason, then the information about the contents stored in the virtual storage 607 at step S622 is deleted (step S626). Then, the failure of contents storing is displayed on a display (not shown) such as CRT in the client 603 (step S627). Instead of such visual displaying, the failure may be notified by outputting alarm speech or by printing out a sheet of paper.

### [3-3] Reading of Contents

After the contents are stored from the server 601 into the assigned area 608, the client 603 conducts necessary processing using them.

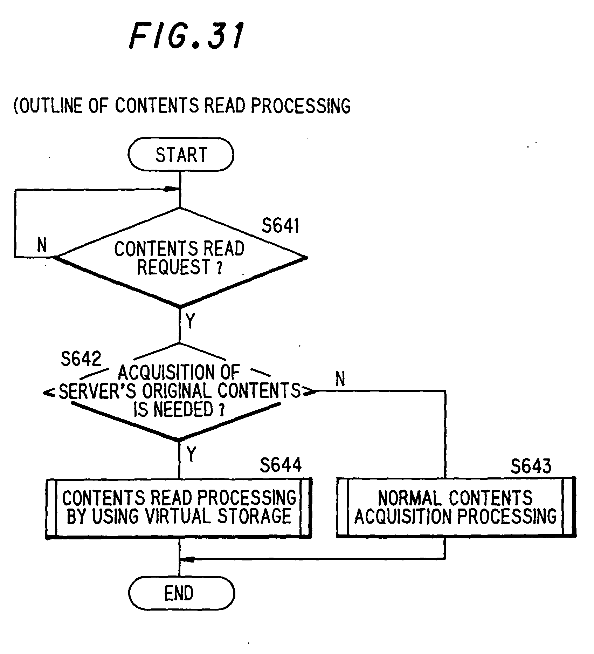

FIG.31 shows the outline of client-side contents read processing after the storing. When there occurs a contents read request based on an instruction etc. of operator (step S641:Y), the client 603 judges whether the original contents in the server 601 need to be read or not (step S642). As described earlier, there are some reasons why the original contents in the server 601 are read. If it is judged that it is necessary to acquire the original contents in the server 601, the normal contents acquisition processing is conducted (step S643). Namely, the contents acquisition request in FIG.30 is generated (step S621), thereby the processing after step S622 starts.

On the other hand, when it is not necessary to acquire the original contents in the server 601, e.g., when the address of concerned contents exists (step S642:Y), it means that the contents concerned are stored in the gateway storage 604. So, the contents read processing using the virtual storage 607 is conducted (step S644). This processing is not so different from that shown in FIGS.11 to 13 in the first embodiment. So, the illustration and explanation of this processing are omitted here.

### [3-4] Deletion of Contents Stored

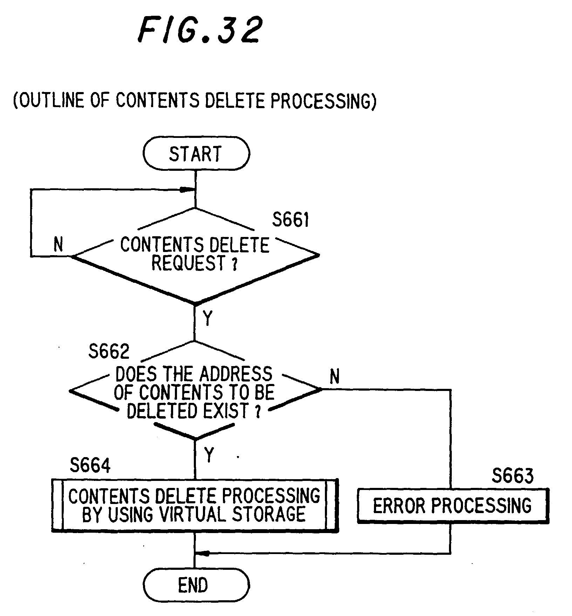

FIG.32 shows processing in a case that contents stored in the client 603 side become unnecessary and therefore they are deleted. When a contents delete request that requests the deletion of specific contents occurs based on an instruction of operator etc. (step S661:Y), the client 603 judges whether the address of the contents exists or not (step S662). In detail, it is checked whether the concerned contents exist in the virtual storage 607, and if existing, then the address is acquired. If the address of the concerned contents does not exist (N), then the error processing is conducted (step S663).

On the other hand, if the address exists, then the contents delete processing is conducted using the virtual storage 607 (step S646). This processing is not so different from that shown in FIGS.16 to 18 in the first embodiment. So, the illustration and explanation of this processing are omitted here.

### [4] Fourth Embodiment

### [4-1] Outline of Communications System

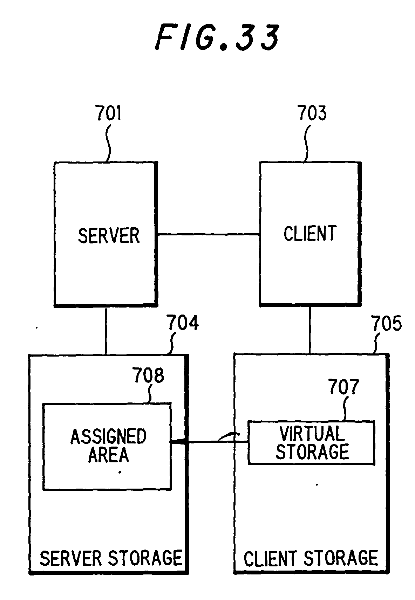

FIG.33 shows the schematic composition of a communications system in the fourth preferred embodiment according to the invention. The communications system comprises a server 701, such as a WWW (world wide web) server, that stores contents. The server 701 is able to directly communicate with a client 703. The server 701 in this embodiment is a computer system that is composed of CPU (not shown) and a built-in server storage 704. Similarly, the client 703 is a computer system that is composed of CPU (not shown) and a built-in client storage 705. The client storage 705 is provided with a virtual storage 707 that is a logical storage. The server storage 704 is composed of an assigned area 708 that is a storing area to store contents corresponding to the virtual storage 707.

Thus, in the communications system in the fourth embodiment, since the memory capacity of the client storage 705 is small originally, for contents, only its pointer information is stored into the virtual storage 707 and the real contents are stored into the assigned area 708 of the server storage 704 correspondingly. Therefore, when the client 703 uses contents, it needs to send a read request to the server 701.

In response to the read request, the server 701 acquires the pointer information about the read target stored in the virtual storage 707, returns contents information corresponding to the pointer information to the client 703. Based on the contents information acquired, the client 703 displays the acquired information or starts to run the program.

### [4-2] Storing of Contents

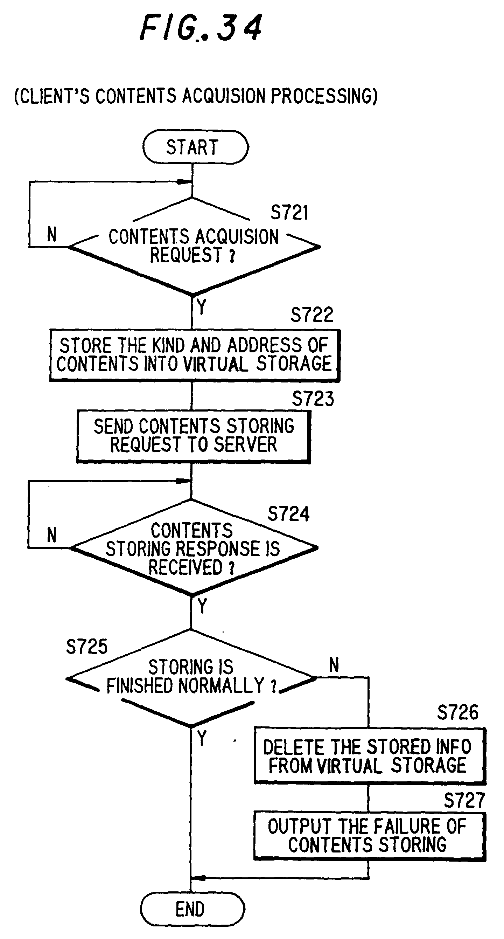

FIG.34 shows, in the fourth embodiment, client-side processing of the contents virtual storage storing processing that contents are stored using the virtual storage. When a contents acquisition request is generated (step S721:Y), the client 703 stores the kind of contents to be stored and the address for storing the contents into the assigned area 708 (FIG.33) into the virtual storage 707 (step S722). When the contents are stored astride multiple areas in the virtual storage 707, the respective addresses may be stored therein. The correspondence between the assigned area 708 of the gateway storage 704 and the virtual storage 707 of the client storage 705 is similar to that shown in FIG.21 in the second embodiment. However, the virtual storage 407 is to be read replaced by the virtual storage 707 and the assigned area 408 is to be read replaced by the assigned area 708.

If the necessary information about the contents is stored into the virtual storage 707, the client 703 sends the contents storing request directly to the server 701 (step S723). Then, it waits for that the contents storing response to inform the result of contents storing to this request is received (step S724). Here, since the server-side processing of the contents virtual storage storing processing is the same as that shown in FIG.21 in the second embodiment, the explanation is omitted here.

If the client 703 receives the contents storing response (step S724:Y), then it is checked whether the storing is finished normally or not (step S725). If the storing is finished normally (Y), then the processing of storing the contents virtually is finished safely (end).

On the contrary, if the storing is not finished normally due to some reason, then the information about the contents stored in the virtual storage 707 at step S722 is deleted (step S726). Then, the failure of contents storing is displayed on a display (not shown) such as CRT in the client 703 (step S727). Instead of such visual displaying, the failure may be notified by outputting alarm speech or by printing out a sheet of paper.

[4-3] Reading of Contents

The read processing of contents acquired in the fourth embodiment is explained below.

The outline of contents read processing is the same as that in FIG.31 in the third embodiment. So the illustration and explanation of this processing are omitted here. Also, with regard to the contents read processing using the virtual storage at step S644 in FIG.31, it is the same as the processing in FIG.23 in the second embodiment. So the illustration and explanation of this processing are omitted here.

### [4-4] Deletion of Contents Stored

The read processing of contents acquired in the fourth embodiment is explained below.

The control in FIG.32 in the third embodiment can apply, as is, to the outline of contents delete processing in the fourth embodiment. So the illustration and explanation of this processing are omitted here. Also, with regard to the contents delete processing using the virtual storage at step S646 in FIG.32, it is not so different from the processing in FIGS.26 to 28 in the second embodiment. So the illustration and explanation of this processing are omitted here.

### [5] Fifth Embodiment

### [5-1] Outline of Communications System

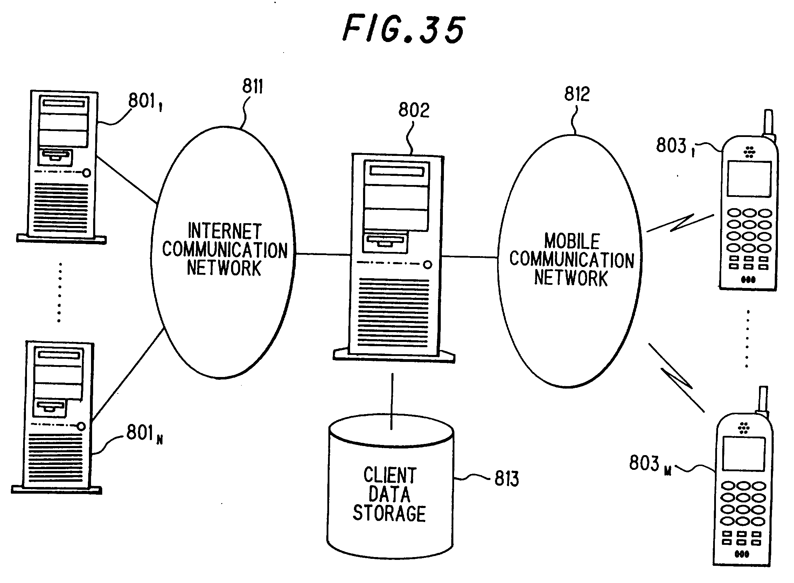

FIG.35 shows the schematic composition of a communications system in the fifth preferred embodiment according to the invention. In the communications system in this embodiment, multiple servers 801₁ to 801_{N} and a gateway 802 are connected to the Internet communications network 811. Also, the gateway 802 is ready to connect through a mobile communications network 812 with clients 803₁ to 803_{M} as portable telephones. To the gateway 803, a client data storage 813 is connected. The servers 801₁ to 801_{N} each store data-format homepages, considering the correspondence with the clients 803₁ to 803_{M} (portable telephones).

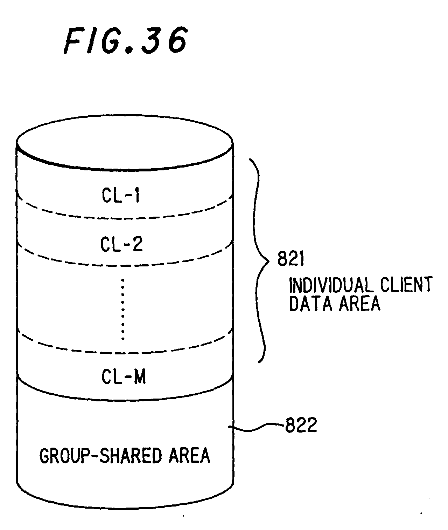

FIG.36 shows the assignment of the storing area of the client data storage 813 in FIG.35. The client data storage 813 is divided into an individual client data area 821 and a group-shared area 822. Thus, the client data storage 813 is provided with individual client data areas CL-1, CL-2, ..., CL-M corresponding to clients 803₁ to 803_{M} as a group associated with the one gateway 802 in FIG.35. The group-shared area 822 is an area to be shared by the group of clients 803₁ to 803_{M}. The client data storage 813 corresponds to the assigned area 108 (FIG.4) in the first embodiment.

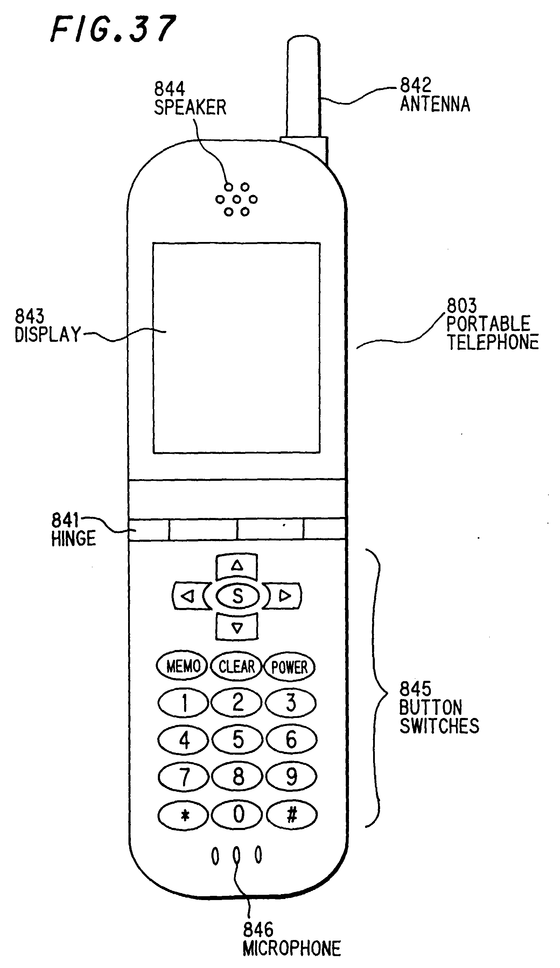

FIG.37 shows the exterior of a portable telephone used as a client in this embodiment. The portable telephone (client) 803 has a form foldable around the center axis of a hinge 841. On the plane with an antenna 842, a display 843 compose of a color LCD and a high-quality-sound speaker 844 ready to playback music are provided. Also, on another plane, various button switches 845 for dialing etc. and a microphone 846 are provided.

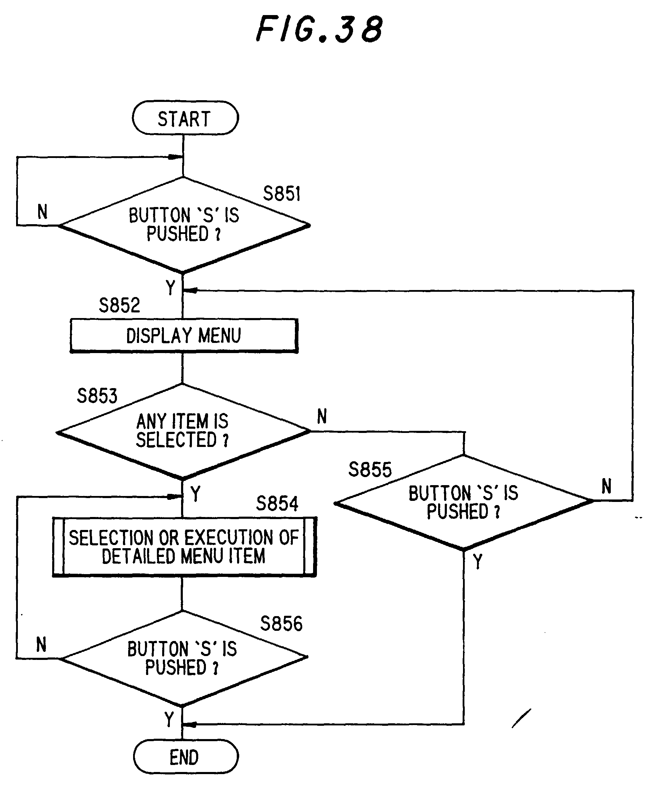

FIG.38 shows the outline of processing conducted at the client side for a special communications service other than telephone call in the fifth embodiment. As a typical example, explained below is a case that the first client 803₁ uses this communications service. The clients 803₁ to 803_{M} respectively use a small computer (not shown) with a built-in CPU, and can use the communications service by running a program stored in the storage of the computer.

### [5-2] Communications Service through Internet etc.

When using a communications service other than normal phone call, its user powers on the portable telephone in FIG.37, then pushes a button S assigned to this special communication service (step S851). Thereby, it proceeds to a mode to conduct the communications service. Along with this, a menu image is displayed on the display 843 (FIG.37) (step S852).

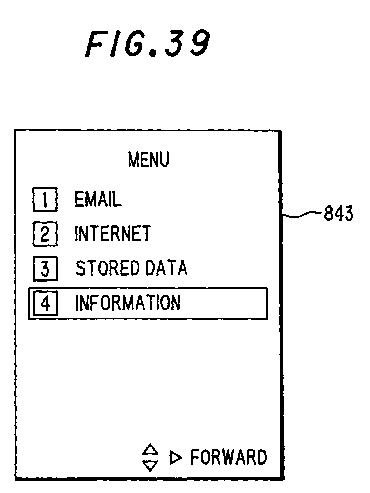

FIG.39 shows the menu image displayed initially when setting the mode. In this state, the user can select a desired item by operating Up/Down buttons next to the button S of the button switches 845, and can select a detailed menu item or see the content of a menu item to be selected finally by pushing a Right button next to the button S of the button switches 845 (step S854). In this embodiment, in order to release the communications mode at the step to display the menu image, the button S is pushed again (step S855). Also, even when the detailed menu item is displayed at step S854 or the content of menu item is displayed, the communications mode can be released by pushing the button S again (step S856:Y).

FIGS.39 to 41 show an example of communication services used conventionally. First, for example, an item 'information' is selected from the menu image in FIG.39 by pushing numeral key '4' of the button switches 845, or the Right button is pushed when this item is reverse-displayed by operating the Up/Down buttons. Thereby, the menu image is changed into displaying of a content shown in FIG. 30. After that, an item 'entertainment' of the content is selected by pushing numeral key '6' of the button switches 845, or the Right button is pushed when this item is reverse-displayed. Thereby, detailed menu contents about 'entertainment' are displayed on the display 843.

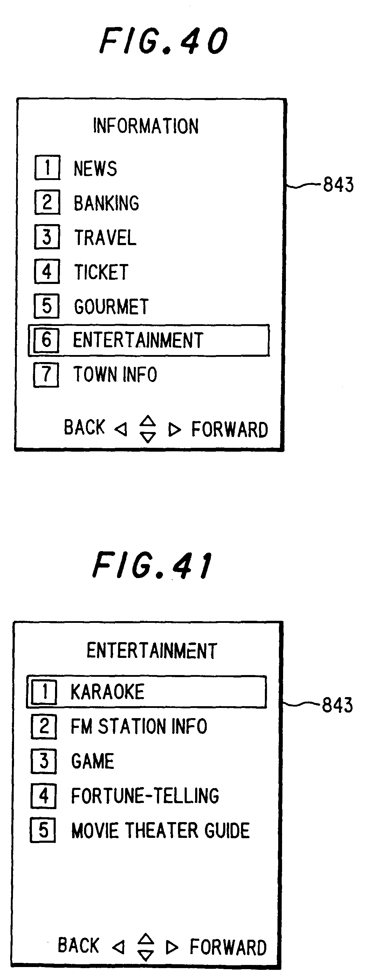

FIG.41 shows a state that the detailed menu image of 'entertainment' is displayed. Of this menu, when, for example, an item 'karaoke' is selected, information about 'karaoke' is displayed on the display 843. Meanwhile, it can return to the previous image by pushing a Left button.

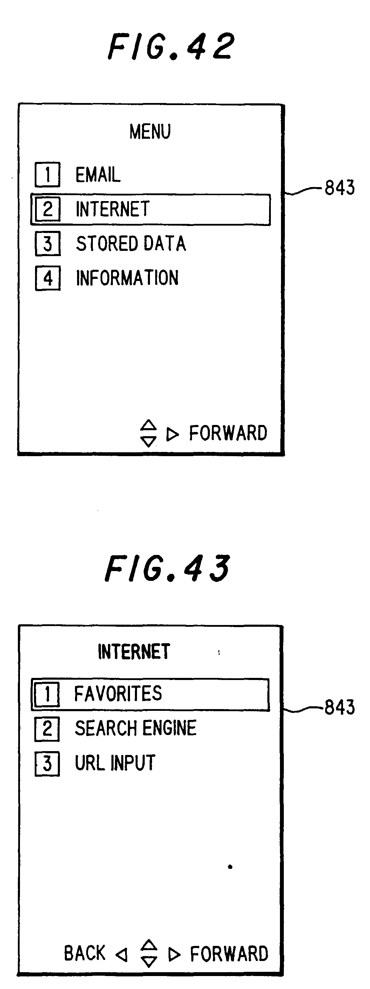

FIGS.42 to 45 are provided to explain examples of accessing the Internet in the fifth embodiment. In order to access the Internet, an item 'Internet' is selected on the initial menu (FIG.42). Meanwhile, in the menu image in FIG.42, there is an item 'stored data'. This is used to read a file downloaded though the Internet in the past, to delete an unnecessary file, or to update the content of a file downloaded though the Internet in the past by downloading its latest version. The contents of file can be also updated by selecting the item 'Internet' as explained later to access a desired file on a homepage concerned. However, in case of updating the contents by selecting the concerned file from 'stored data', the file concerned is acquired by the gateway 802 side and is then sent to the client 803. Thus, in a system that the accounting is made according to amount of data transferred, the accounting is made only for amount of the data of the file concerned. So, it is more economical than a case that the accounting is also made for other files to be automatically acquired on the homepage.

FIG.43 shows a menu image displayed when selecting the item 'Internet' in FIG.42. In this case, selected can be any one of a way to select a homepage from URL (uniform resource locators), called 'favorites', already registered as a bookmark, a way to select a search page called 'search engine' and a way to conduct directly 'URL input'. If, of these ways, the top or bottom item is selected, then the selection of URL or the input of URL is conducted. Thereby the client 803 can be connected to the Internet communications network 811 through the gateway 802 (FIG.35). This connection processing is explained in detail later. Here, it is assumed that the item 'favorites' is selected.

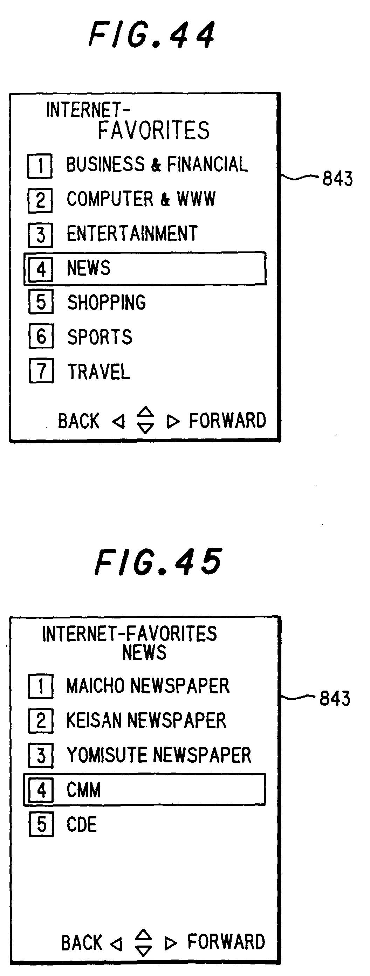

FIG.44 shows a state that an item 'news' is selected from the 'favorites' menu. FIG.45 shows a state that a news item of a company 'CMM' is selected from the 'news' menu. When the news item of the company 'CMM' is selected, the gateway 802 side accesses the homepage to provide the news of the company 'CMM' based on the URL.

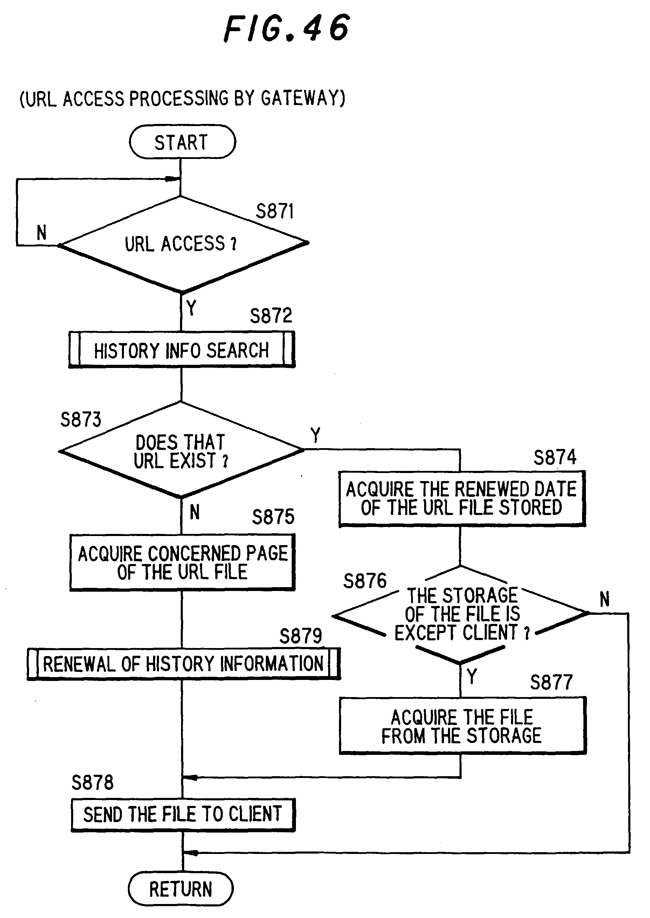

FIG.46 shows the homepage access processing conducted at the gateway 802 side. For example, when the first client 803₁ conducts the URL access (step S871:Y), the gateway 802 searches the history information of the client 803₁ (step S872). If the URL exists in the history information (step S873:Y), then information about the renewal date of the URL file stored is acquired (step S874). In contrast, if the URL does not exist in the history information (step S873:N), the gateway 802 accesses the concerned page on concerned homepage URL, acquiring that file (step S875).

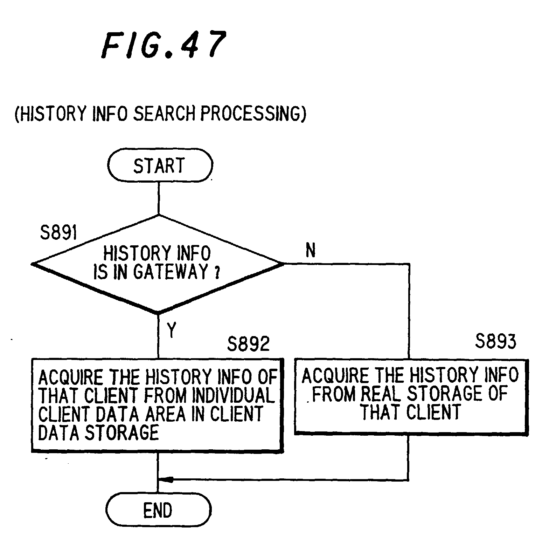

FIG.47 shows the details of the history information search processing. The gateway 802 judges whether the history information of URL requested by the first client 803₁ is stored in the gateway 802 or not (step S891). If stored (Y), then the concerned history information is acquired from the individual client data area CL-1 corresponding to the client 803₁ in the client data storage 813 (step S892). In contrast, if it is determined that the history information is not stored in the gateway 802, since in this embodiment the history information is instead stored in the real storage (see the real storage 106 in FIG.4) of the first client 803₁, then the history information is acquired from the real storage (step S893).

Returning to FIG.46, the explanation is continued. If the renewal date of the URL file stored is acquired at step S874, then it is checked whether part where that file is stored is except the client or not (step S876). In this regard, by recording whether each file is stored in the gateway 802 side or the client 803 side into the history information, the storage of file can be checked without searching the file actually. If the file is stored in the gateway 802 side (Y), then the file concerned is acquired from the individual client data area CL-1 or the group-shared area 822 that corresponds to the storing part (step S877), and sent to the first client 803₁ (step S878). The first client 803₁ displays the concerned URL page on the display 843 using this.

As described above, there is a possibility that the file concerned can be acquired from the group-shared area 822. This is because, for example, when the same group of clients 803₁ to 803_{M} belong to a same department and they jointly subscribes common news (e.g., 'portable telephone association news'), they may store the files as shared data. In such a case, it is necessary to take the double-structured management that the history information is managed in units of both individual and group, or to, for shared files, make a file acquired by the access of the first client 803₁ reflect into all the other clients 803₂ to 803_{M}.

On the other hand, if at step S876 the storage of the concerned URL file is the client (N), then it is not necessary to send that file from the gateway 802 to the first client 803₁ concerned. In this case, using the file stored in the own real storage 106, the first client 803₁ displays the concerned URL page on the display 843. In any way, when the history information of concerned URL file remains at step S873, in this embodiment it is assumed that that file also remains. In that case, the page can be displayed without accessing the server 801 concerned. Thereby, in the client 803 side, the display processing of homepage can be made faster, and the communication cost can be reduced because the processing to acquire the file from the server 801 is omitted.

In contrast, if the URL requested by the first client 803₁ does not exist at step S873, then the file concerned is directly acquired from the targeted server 801 (step S875). In this case, history information about that file is made and the entire history information is renewed (step S879). Then, the file concerned is sent to the first client 803₁ (step S878).

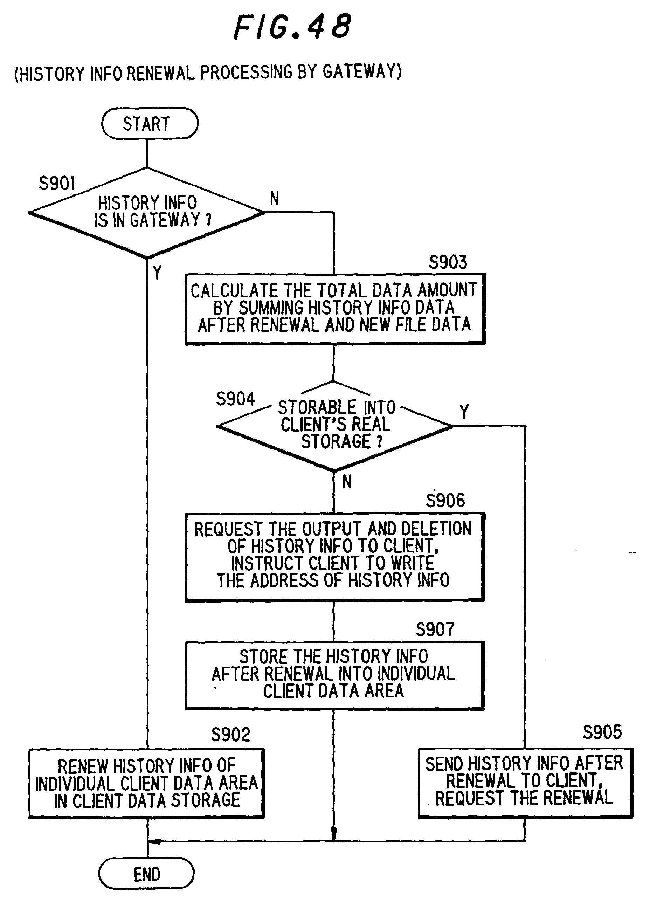

FIG.48 shows the details of the history information renewal processing conducted by the gateway 802 at step S879. The gateway 802 checks whether the history information about the first client 803₁ is stored in the gateway 802 side (step S901). If stored in the gateway 802 (Y), based on an assumption that the total amount of history information data increases due to the renewal, then the renewal is, as before, conducted adding new history information to the individual client data area CL-1 corresponding to the first client 803₁ in the client data storage 813 (step S902).

On the other hand, when the history information is stored in the first client 803₁, the total of history information after the renewal and amount of new file data may exceed the acceptable range of the first client 803₁. So, the total amount of these data is calculated (step S903), then it is judged whether the data are storable in the real storage of the first client 803₁ (step S904). If storable (Y), then the history information after the renewal is sent to the first client 803₁ and the renewal is requested (step S905).

In contrast, if at step S904 it is judged that the memory capacity of the real storage in the first client 803₁ is lacking (N), then the first client 803₁ is requested to output the history information stored up to now to the gateway 802 side and to delete the history information after the output from the first client 803₁. Also, cooperating with this deleting, issued is an instruction to write the address of history information at the gateway 802 side to which the history information is stored newly into the virtual storage (see the virtual storage 107 in FIG.4) of the first client 803₁ (step S906). Then, the total history information after the renewal about the first client 803₁ is stored into the individual client data area CL-1 corresponding to the first client 803₁ in the client data storage 813 (step S907).

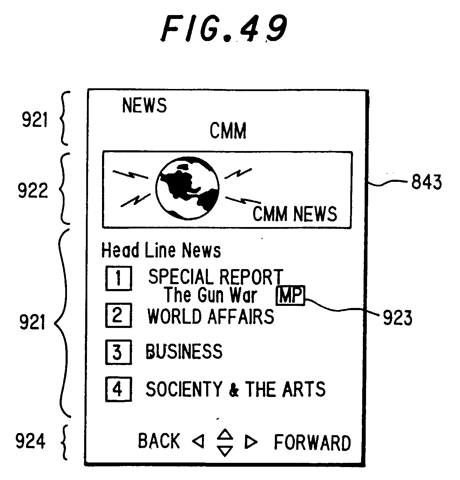

FIG.49 shows an image displayed when accessing the homepage URL of 'CMM' news from the menu image in FIG.45. Displayed on the display 843 is image information that text information 921 described by HTML in this example and image information 922 to 924 are combined. This information is composed of separate files, and the history information is divided into information of whole one page and information of each file. The image information 923 indicates that there exists image information by MPEG (moving picture experts group) on the concerned page. In this embodiment, a same file acquired accessing a homepage in the past is not downloaded again, thereby amount of data transferred can be reduced. This is processed like below.

First, checking the history information of the entire page (history information of the highest-order file), if this is identical with the previous history information, since the file lower than this is also identical with that, then the download of that page is not conducted. If the history information of the highest-order file is not identical with the history information in the past, then the history information of each of the one step lower files is compared with the history information in the past. Then, files identical are not downloaded, and for files not identical the like process is taken searching the further lower files. If there is no lower file, since it means that the content of file is not identical, that file is downloaded. Also when there is a new file in comparing with the lower file, this file is, of course, downloaded.

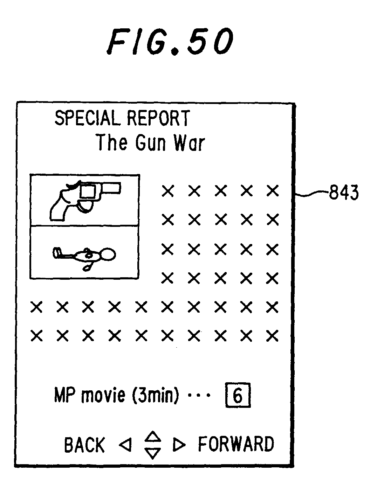

FIG.50 shows a state that an item 'WORLD AFFAIRS' is selected from the menu in FIG.49. When a new item is thus selected, URL of the concerned page is accessed (step S871 in FIG.46). In this case, as described above, only the file with page contents changed is downloaded from the server 801. For the image displayed on the display 843 in FIG.49, numeral key '6' of the button switches 845 is selected or the Right button is pushed down when this item is reverse-displayed by operating the Up/Down button. Thereby, the playback of movie is selected. Here, the speech is output through the speaker 844 in FIG.37.

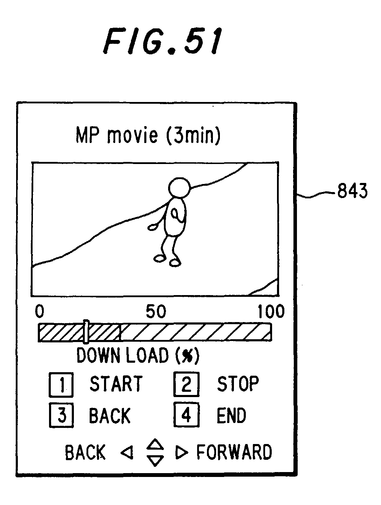

FIG.51 shows a state that the playback of movie is conducted hereby. Thus, since even large amount of data such as movie file can be stored in the individual client data area 821 or group-shared area 822 (FIG.36) of the gateway 802 side, even when the client 803 has only small memory capacity, the movie or music on a homepage of the Internet can be enjoyed sufficiently.

### [6] Sixth Embodiment

### [6-1] Outline of Autopilot System

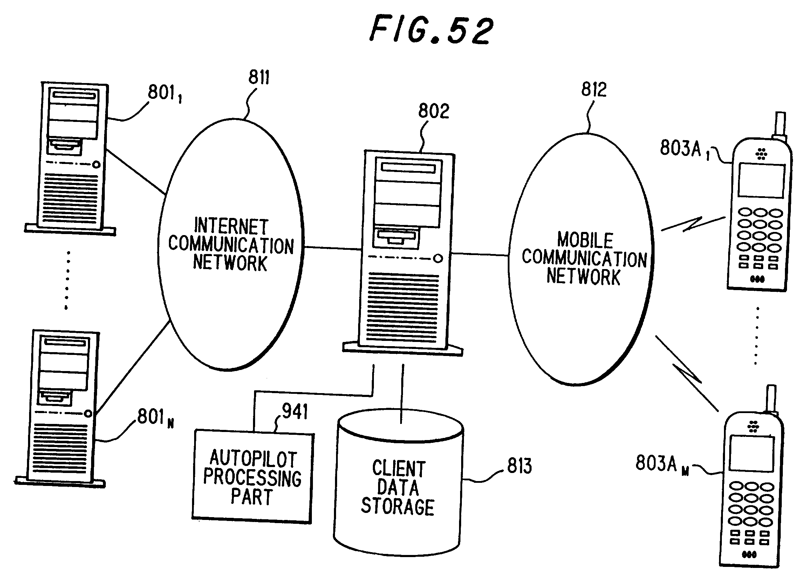

FIG.52 shows the schematic composition of a communications system, which corresponds to a modification of that in the fifth embodiment in FIG.35, in the sixth preferred embodiment according to the invention. In FIG.52, like parts are indicated by like reference numerals as used in FIG.35. So, the explanation thereof is omitted here. In this embodiment, a gateway 802A is provided with an autopilot processing part 941 in addition to the client data storage 813. Thus, the entire communications system forms an autopilot system. The autopilot processing part 941 is provided to patrol the servers 801₁ to 801_{N} connected with the Internet communications network 811 to download the file of a desired homepage according to (a) the request of clients 803A₁ to 803A_{M} or (2) the voluntary operation of the gateway 802 side. The clients 803A₁ to 803A_{M} are different from the clients 803₁ to 803_{M} in that they are equipped with a program to which the function of instructing the autopilot processing to the gateway 802A is added. Therefore, in another modification of communications system that only the gateway 802 side may conduct the voluntary autopilot operation, the clients 803₁ to 803_{M} in the fifth embodiment can be used unalteredly.

### [6-2] Autopilot by Client's Request

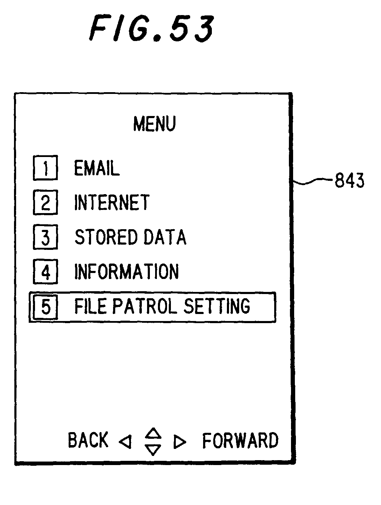

FIG.53 shows a menu image, which corresponds to that in FIG.39, displayed initially after setting the mode to conduct the communication service. In this menu image, an item 'FILE PATROL SETTING' is displayed additionally. When the client 803 side selects this item 'FILE PATROL SETTING', the autopilot to get desired files on homepage is requested toward the gateway 802A side.

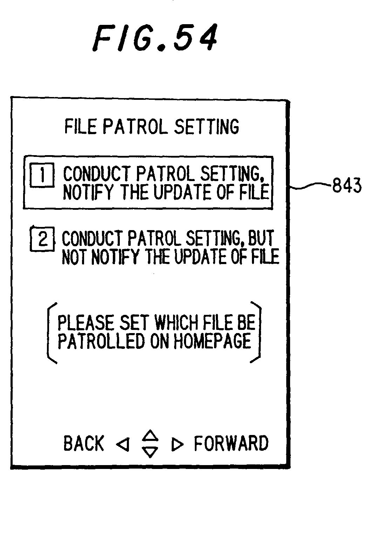

FIG.54 shows a content displayed on the display when the item 'FILE PATROL SETTING' is selected. Displayed on the display 843 are an option to 'conduct the patrol setting and notify the update of file' and an option to 'conduct the patrol setting but not to notify the update of file'. If the former is selected, then the gateway 802A side goes to check whether the content of a designated file on homepage is updated at intervals of a time and, when the file is updated, stores the file into a special storage in the gateway 802A side. Then, the notification about the update of file is sent through email to the concerned client 803A. Of course, depending on the communications system, the notification may be conducted by calling directly the client 803A using synthetic voice or by displaying that information on the display 843 of the client 803A.

On the contrary, when the image in FIG.54 is displayed on the display 843, if the latter is selected, then the gateway 802A side goes to check whether the content of a designated file on homepage is updated at intervals of a time and, when the file is updated, stores the file into a special storage in the gateway 802A side. The processing is thus finished. Therefore, the client 803A side cannot know the update of file until it accesses the concerned file on the homepage next time. However, the client 803A can find instantly that file inside the gateway 802A when requesting the access to the file concerned. Namely, it is not necessary for the client 803A to access the concerned one of the servers 801₁ to 801_{N} through the Internet communications network each time. Also, it is not necessary to consider a wait time caused by a delay in transmission line. Therefore, it can get the target file quickly. Also for files not updated, although there occurs a bit of time difference in checking the update, the fact can be known without accessing the Internet each time.

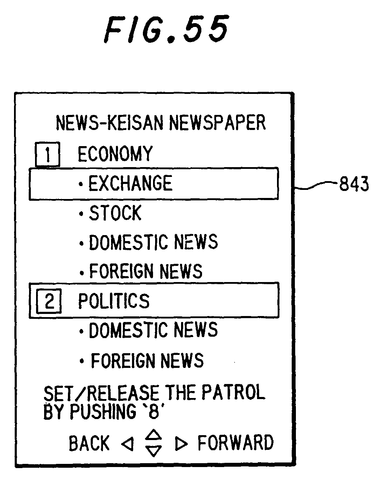

FIG.55 shows a display content in this embodiment corresponding to a case that an item 'KEISAN NEWSPAPER' is selected from the menu in FIG.45 in the fifth embodiment. Although downloading all of updated ones of all files in the item 'KEISAN NEWSPAPER' is conducted selecting the item 'KEISAN NEWSPAPER' at the menu in FIG.45, in FIG.55 the autopilot can be set selecting properly one or multiple items from the menu displayed on the display. The setting of a party subject to the autopilot is conducted by reverse-displaying the major or minor item concerned using the Up/Down buttons and in this state by pushing numeral key '8' of the button switches 845. At this time, the selected item is displayed flashing. When the same key is pushed, the setting is released. In FIG.55, 'EXCHANGE' and 'POLITICS (DOMESTIC and FOREIGN NEWS)' are set as the items of autopilot.

When the autopilot items are thus set, the gateway 802A stores these into a patrolled address storage (not shown) in the autopilot processing part 941 while adding the correspondence to the client 803A that requests the setting. If the autopilot items are changed, the content of the patrolled address storage is also changed in association with the client 803A.

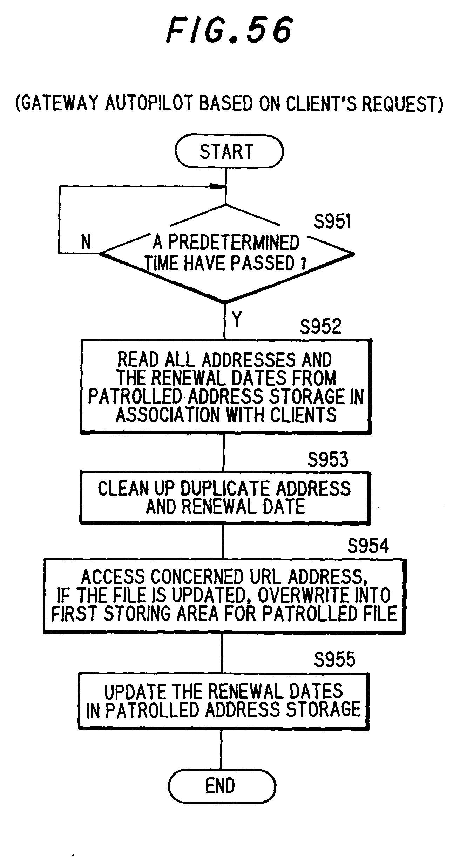

FIG.56 shows the gateway-side autopilot operation based on the client's request. Every time when a predetermined time passes, the gateway 802A starts to check the update status of each homepage (step S951). However, depending on the homepage, the update may be conducted frequently like that of newspaper company or conducted less than a few times a month like personal homepage. So, although not detailed herein, based on the result of checking the update history of files, a time interval for autopilot can be set to multiple selected groups to need the autopilot frequently.

Now, if it comes to time for the autopilot (step S951:Y), the gateway 802A reads all URL addresses stored in the patrolled address storage and their latest renewal dates in association with a client (step S). Then, when accessing the homepage actually, in order to avoid waste caused by the access of multiple clients 803A to a same file, the clean-up of duplicate address is conducted (step S953). In this step, if there are different renewal dates about a same file, the latest one is employed.

When all URL addresses whose update is to be checked are prepared, the gateway 802A accesses sequentially concerned one of the servers 801₁ to 801_{N} and checks whether the corresponding file is updated newly or not, and if updated, then it is overwritten into the concerned file of a first patrolled file storing area (not shown) in the autopilot processing part 941 (FIG.52) (step S954). For an additional file requested newly by the client 803A, it is stored newly. Then, the renewal date of the patrolled address storage is renewed for each file of the clients 803A₁ to 803A_{M} (step S955).

### [6-3] VOLUNTARY AUTOPILOT BY GATEWAY

The gateway 802A in this embodiment, even as to URL with no request for autopilot from the respective clients 803₁ to 803_{M}, acquires voluntarily the file of URL that there is a high possibility of being accessed again as the result of considering its actual frequency of access, and then stores it into a second patrolled file storage (not shown) in the auto pilot processing part 941 (FIG.52). This is because it is intended to reduce, by downloading such a file in a time zone with relatively low traffic, the load of the Internet communications network when the access to homepages from the respective clients 803A₁ to 803A_{M} crowds. Thereby, the communications processing can be made more efficient. In this embodiment, such autopilot is conducted for each address unit of file on homepage, and the monitoring of access frequency is conducted by a history storage (not shown) in the autopilot processing part 941.

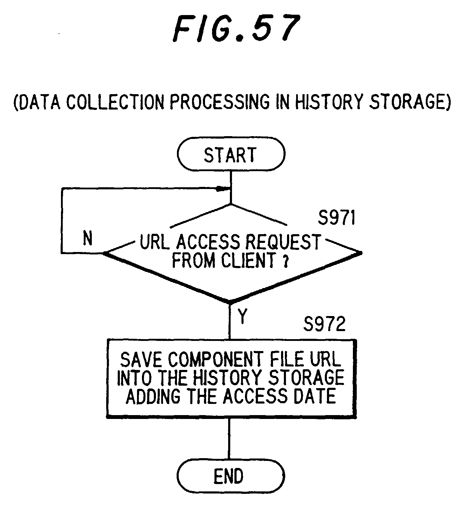

FIG.57 shows the processing that the gateway stores data into the history storage. When there is an access request from any one of the clients 803A₁ to 803A_{M} to URL on the Internet (step S971:Y), the gateway 802A in this embodiment conducts the access processing as described earlier and simultaneously stores each component file of homepage into the history storage while adding its access date (date and time) thereto (step S972). In this way, URL that the clients 803A₁ to 803A_{M} accessed as time passes is stored, accompanied with its date information, into the history storage.

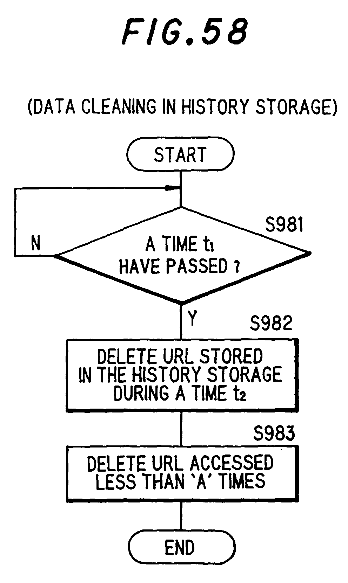

FIG.58 shows a processing that contents stored in the history storage are cleaned. Every time when a predetermined time t₁ passes (step S981:Y), the gateway 802A deletes information about URL that a time t₂ have passed while being stored into the history storage (step S982). Here, the time t₂ has a value bigger than the time t₁. For example, when the time t₁ is 24 hours (one day), the time t₂ is 240 hours (10 days). After the old data is thus deleted, the gateway 802A deletes URL that is accessed less than 'A' times (step S983). This deletion is conducted while checking whether a same URL is subject to the access with different dates (date and time) 'A' times or more. In this way, the amount of data stored in the history storage can be set to be in a proper range.

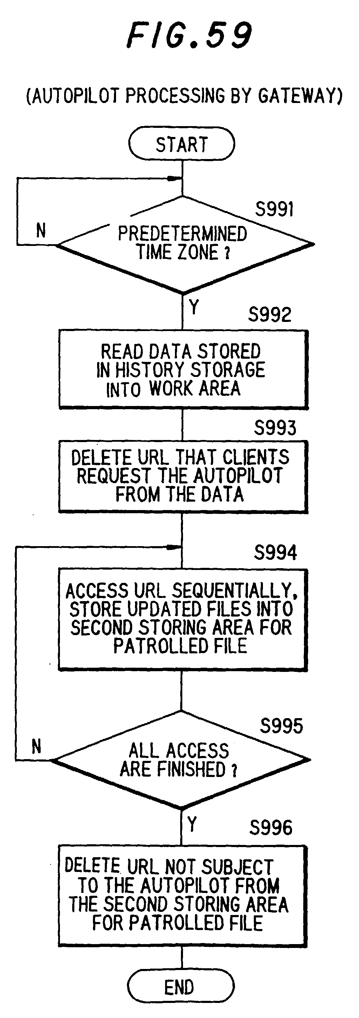

FIG.59 shows the autopilot processing that is conducted using data of the history storage which are thus changed at that interval. When it comes to a predetermined time zone when the traffic of the Internet communications network (FIG.52) lowers as described earlier (step S991:Y), the gateway 802A reads out current data stored in the history storage into a given work area (step S992). Then, it deletes, in units of file, URL that the respective clients 803A₁ to 803A_{M} request for the autopilot described earlier from the data readout (stepS993). This is because the URL files that the respective clients 803A₁ to 803A_{M} request for the autopilot are made to be stored in the gateway 802A side since they are to be collected otherwise, thereby it is intended to avoid waste caused by accessing the same URL again.

URLs thus left in the work area correspond to ones that are not accessed by the request of the clients 803A₁ to 803A_{M} and are accessed at a certain frequency recently and there is a high possibility of being accessed by each of the clients 803₁ to 803_{M} from now on. So, the gateway 802A accesses sequentially these URLs on the servers 801₁ to 801_{N}, and if the content of file is updated, then it is overwritten into the corresponding URL file of the second patrolled file storing area to update the content (step S994). If not updated, then it is not necessary to download the content. For a new URL, its file is made and stored newly into the second patrolled file storing area.

When the access to all the existing URLs is finished (step S995:Y), URL files not subject to this autopilot are deleted from the second patrolled file storing area (step S996). By conducting the deletion of file after step S994, the amount of data stored in the second patrolled file storing area can be prevented from increasing unnecessarily. Also, it can be avoided that the download of file is conducted doubly every time when the respective clients 803₁ to 803_{M} access URL referring to URLs of the first and second patrolled file storing areas.

Although in the sixth embodiment the gateway 802A conducts the voluntary autopilot except URL subject to the autopilot based on the request of the clients 803₁ to 803_{M}, it is, of course, also possible to conduct the voluntary autopilot by the gateway 802A including the URL subject to the autopilot based on the request of the clients 803₁ to 803_{M}.

Meanwhile, since in the first to fourth embodiments only the schematic compositions of the communications system are explained, examples of their relatively-detailed composition are supplemented below. However, these examples do not limit the system of this invention exemplified in the first to sixth embodiments.

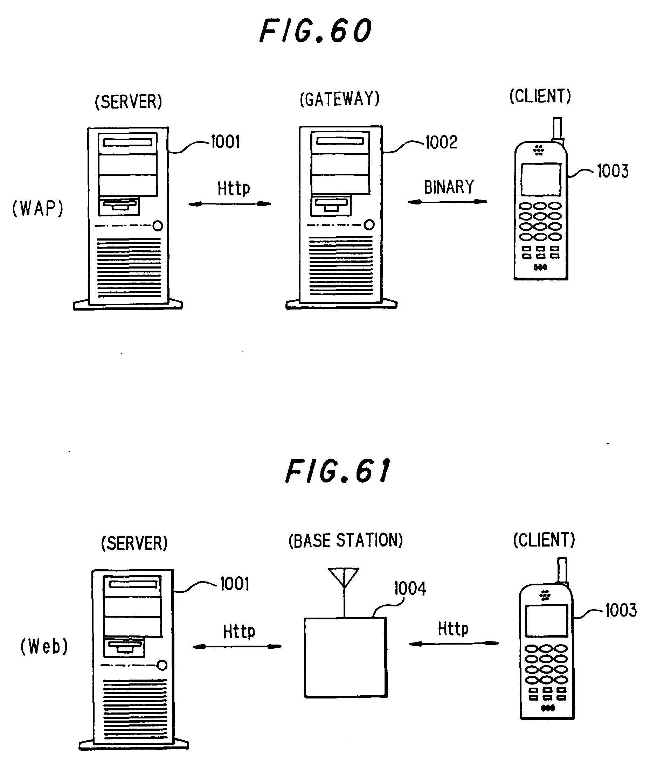

FIG.60 shows an example that the communications system of the invention is composed using WAP (wireless application protocol). FIG.61 shows another communications system for comparison. The WAP in FIG.60 is a protocol for getting the Internet information by wireless means from a portable telephone or a PDA (personal digital assistance). When accessing a homepage made using HTML (hyper text makeup language) by using the WAP, HTML files are sent from a normal server 1001 to a gateway 1002. The gateway 1002 makes an image to be displayed by a client 1003 and sends it as binary data. In this case, a text is transmitted as text data and tag information of homepage is transmitted directly as binary data. Thus, in the communications system using the WAP, even when data sent to the client 1003 side are relatively large, the data are actually transmitted in units of image.

Therefore, in the example of the communications system using the WAP, it is not necessary for the client 1003 side to have a large capacity of memory. This is very effective in reducing the load of the client side in the communications system also when employed in the fifth and sixth embodiments. In addition, when storage of file is provided at a place except the client side, relatively large amount of data can be also acquired from the server 1001.

On the other hand, in the communications system in FIG.61, the normal server 101 is connected through a base station 1004 to the client 1003. In this communications system, HTML files can be transmitted not only between the server 1001 and the base station 1004 but also between the base station 1004 and the client 1003. When the client 1003 in FIG.61 is such a desktop PC that can be wire-connected with the server 1001, the base station 1004 is not necessary. Since the client receives directly the HTML file, it is necessary to conduct the processing to make an image. Also, when relatively large amount of data are sent from the server, as described earlier, it is necessary to store them in some place or to install additionally a large capacity of memory.

Although in the above embodiments the communications systems employing the radio-connection between the client and the gateway or mobile communications network are explained, the invention can, of course, also unalteredly apply to a communications system employing the wired connection between the client and the gateway or Internet communications network, as explained earlier. In this case, the client includes communication devices such as a typical desktop PC.

Although in the first to fourth embodiments the server to store the contents data that must be stored in the client originally is exemplified as means for supplementing the memory capacity of the client, such a server does not always have to be the server from which the contents are acquired. For example, it may be a dedicated server that is connected to the Internet communications network and serves to supplement the memory capacity of the client.

### Advantages of the Invention:

In the invention defined in claim 1 attached herein, in case of acquiring contents from the contents storing server, when there are contents not storable into the real storage in capacity, the client stores information to indicate a location of the contents into the virtual storage, and the contents are stored at a position of the gateway corresponding to the information to indicate the location of the contents. Therefore, even when the amount of contents data increases, the client can, in some lump, take out the content from the contents storing server. So, the load of the contents storing server can be reduced. Also, since it is not necessary to acquire the contents from the contents storing server each time, the processing can be made faster. Furthermore, in this invention, since the client is provided with the real storage to store the contents, when the amount of contents data does not exceed its capacity, the contents can be directly taken into the client side. Also on this point, the processing can be made faster.

In the invention defined in claim 2 attached herein, in case of acquiring contents from the contents storing server, when there are contents not storable into the real storage in capacity, the client stores information to indicate a location of the contents into the virtual storage, and the contents are stored in the storing area of the contents storing server. Therefore, even when the amount of contents data increases, the client can, in some lump, request the contents toward the contents storing server. So, the processing can be simplified. Furthermore, in this invention, since the client is provided with the real storage to store the contents, when the amount of contents data does not exceed its capacity, the contents can be directly taken into the client side. Also on this point, the processing can be made faster. Also, in this invention, to repeat the request to the contents storing server is allowed. So, other than the contents acquired when requested initially, the latest ones can be also acquired. Depending on the object, these can be optioned.

In the invention defined in claim 3 attached herein, in case of acquiring contents from the contents storing server, when there are contents not storable into the real storage in capacity, the client stores information to indicate a location of the contents into the virtual storage, and the contents are stored in the temporary storing server. Therefore, without requiring the increase of memory capacity in the contents storing server and gateway, the contents can be stored.

In the invention defined in claim 4 attached herein, the client is provided with the virtual storage for storing information to indicate a location of the contents, and the contents are stored in the gateway. Therefore the memory capacity of the client side can be set to be sufficiently small. So, the device can be miniaturized and the cost can be reduced.

In the invention defined in claim 5 attached herein, the client is provided with the virtual storage for storing information to indicate a location of the contents, and the contents are stored in the storing area of the contents storing server. Therefore the memory capacity of the client side can be set to be sufficiently small. So, the device can be miniaturized and the cost can be reduced.

In the invention defined in claim 6 attached herein, the client is provided with the virtual storage for storing information to indicate a location the contents into the virtual storage, and the contents are stored in the temporary storing server. Therefore the memory capacity of the client side can be set to be sufficiently small. So, the device can be miniaturized and the cost can be reduced. Furthermore, since the contents are temporarily stored in the storing area of the temporary storing server that is provided other than the contents storing server, the concentration of access to the contents storing server can be prevented.

In the invention defined in claim 7 attached herein, the gateway voluntarily acquires, from the contents storing server, selected ones of contents that the client sent the acquisition request through the gateway to the contents storing server in the past. Using these contents, the acquisition request from the client is processed. Therefore, the concentration of access to the contents storing server can be prevented. Also, such autopilot is conducted using the unoccupied time of the gateway or a time zone when the communications network between the contents storing server and the gateway does not crowd. Thereby, the communications processing can be made faster and more efficient. Furthermore, depending on the rate system between the client and the gateway, this may allow the client to acquire the contents at a lower rate. In addition, since the autopilot is voluntarily conducted by the gateway, there is an advantage that the client can save labor. Also, the contents acquired by the autopilot are stored in the gateway side. Therefore, the memory of the client is not used wastefully, and relatively large amount of contents can be stored and renewed, thereby enhancing the hit ratio sufficiently.

In the invention defined in claim 8 attached herein, the gateway conducts the autopilot based on the setting of autopilot by the client. Therefore, the autopilot can be conducted according to the needs of the client. Also, the contents acquired by the autopilot are stored in the gateway side. Therefore, the memory of the client is not used wastefully.

In the invention defined in claims 9 and 10 attached herein, in the communications system using the autopilot according to claim 7 or 8, the client is provided with the real storage for storing contents actually and the virtual storage for storing location information of the contents. For contents not storable into the real storage in capacity, its location information is stored into the virtual storage, and the contents are stored in the storing area of the gateway. This allows the client to access freely various contents without increasing the memory capacity.

In the invention defined in claims 11 to 14 attached herein, in the communications system according to claim 4, 5, 7 or 8, the gateway transmits, in units of frame, converting contents stored in the contents storing server into bitmap data. Therefore, it is not necessary to store the contents itself in the client side. So, the load of image processing in the client can be reduced.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. A communications system, comprising:
a contents storing server for storing contents to be distributed;
a client that is composed of a real storage for storing contents actually and a virtual storage for storing a location of contents stored, wherein said client stores, into said virtual storage, information to indicate the location of contents not storable in said real storage in capacity when acquiring the contents from said contents storing server; and
a gateway that is placed between said contents storing server and said client, wherein said gateway stores the contents at a position of an assigned storing area in said gateway corresponding to the information to indicate the location of the contents when said location information is stored into said virtual storage.

2. A communications system, comprising:
a contents storing server for storing contents to be distributed, said contents storing server being provided with a storing area for storing temporarily contents to be transmitted to a distributed party; and
a client that is composed of a real storage for storing contents actually and a virtual storage for storing a location of contents stored, wherein said client stores, into said virtual storage, information to indicate the location of contents not storable in said real storage in capacity when acquiring the contents from said contents storing server, and stores temporarily the contents into said storing area of said contents storing server.

3. A communications system, comprising:
a contents storing server for storing contents to be distributed;
a temporary storing server that is provided with a storing area for storing temporarily contents to be transmitted to a distributed party requesting the contents; and
a client that is composed of a real storage for storing contents actually and a virtual storage for storing a location of contents stored, wherein said client stores, into said virtual storage, information to indicate the location of contents not storable in said real storage in capacity when acquiring the contents from said contents storing server, and stores temporarily the contents not storable into said storing area corresponding to said location information of said temporary storing server, and when the contents are needed, said client requests for the acquisition of the contents to said temporary storing server.

4. A communications system, comprising:
a contents storing server for storing contents to be distributed;
a client that is composed of a virtual storage for storing a location of contents stored, wherein said client stores, into said virtual storage, information to indicate the location of contents when acquiring the contents from said contents storing server; and
a gateway that is placed between said contents storing server and said client, wherein said gateway stores the contents at a position of an assigned storing area in said gateway corresponding to the information to indicate the location of the contents when said location information is stored into said virtual storage.

5. A communications system, comprising:
a contents storing server for storing contents to be distributed, said contents storing server being provided with a storing area for storing temporarily contents to be transmitted to a distributed party; and
a client that is composed of a virtual storage for storing a location of contents stored, wherein said client stores, into said virtual storage, information to indicate the location of contents when acquiring the contents from said contents storing server, and stores temporarily the contents into said storing area of said contents storing server, and based on said location information stored in said virtual storage, said client acquires the concerned contents from said storing area of said contents storing server at desired time.

6. A communications system, comprising:
a contents storing server for storing contents to be distributed;
a temporary storing server that is provided with a storing area for storing temporarily contents to be transmitted to a distributed party requesting the contents; and
a client that is composed of a virtual storage for storing a location of contents stored, wherein said client stores, into said virtual storage, information to indicate the location of contents when acquiring the contents from said contents storing server, and stores temporarily the contents into said storing area corresponding to said location information of said temporary storing server, and when the contents are needed, said client requests for the acquisition of the contents to said temporary storing server.

7. A communications system, comprising:
a contents storing server for storing contents to be distributed;
a client for conducting the acquisition request of contents; and
a gateway that is placed between said contents storing server and said client, wherein said gateway is composed of means for selecting predetermined contents from contents that ware requested by said client in the past, and an autopilot means for accessing periodically said contents storing server regardless of whether there is a request from said client or not to acquire said selected contents, and when the acquisition of the distributed contents stored in said contents storing server is requested by said client, if the contents acquired by said autopilot means agree with that request, then said gateway distributes the contents in substitution for said contents storing server.

8. A communications system, comprising:
a contents storing server for storing contents to be distributed;
a gateway that is composed of an autopilot storing means for acquiring periodically predetermined contents from said contents storing server and storing the contents into a predetermined storing area thereby conducting the update of contents, and a contents transmitting means for, when the acquisition of the distributed contents stored in said contents storing server is requested, if the contents acquired by said autopilot storing means agree with that request, then transmitting the contents to its requesting party, else acquiring the contents from said contents storing server and transmitting it to said party; and
a client that is composed of a normal contents acquisition requesting means for requesting the acquisition of contents through said gateway to said contents storing server, and an autopilot requesting means for requesting, to said gateway, that desired contents are stored, as said predetermined contents, in said predetermined storing area in said autopilot storing means.

9. A communications system according to claim 7 or 8, wherein:
said client is composed of a real storage for storing contents actually and a virtual storage for storing a location of contents stored, wherein said client stores, into said virtual storage information to indicate the location of contents not storable in said real storage in capacity when acquiring the contents from said contents storing server, and stores said contents not storable into a storing area of said gateway, and when needed, said client takes out said stored contents from said gateway.

10. A communications system according to claim 4, 5, 7 or 8, wherein:
said gateway transmits, in units of frame, converting the contents stored in said contents storing server into bitmap data to said client.
